# FASCICULE DE BREVET EUROPEEN

(11) **EP 3 680 146 B1**
(45) Date de publication et mention de la délivrance du brevet: **24.11.2021**
(21) Numéro de dépôt: 20151636.6
(22) Date de dépôt: 14.01.2020
(51) Int. Cl.: B62B 7/00, B62B 9/28, B62B 9/08, B62B 5/04, B62B 9/00

(54) **ACCESSOIRE POUR POUSSETTE, AINSI QU'ENSEMBLE FORMANT POUSSETTE DOUBLE**
ZUBEHÖR FÜR KINDERWAGEN SOWIE GESAMTHEIT, DIE EINEN DOPPELKINDERWAGEN BILDET
ACCESSORY FOR PUSHCHAIR, AND ASSEMBLY FORMING A DOUBLE PUSHCHAIR

(30) Priorité: 14.01.2019 FR 1900316; 06.09.2019 FR 1909819
(43) Date de publication de la demande: 15.07.2020
(73) Titulaire: BABYZEN, 13100 Aix-en-Provence (FR)
(72) Inventeur: Chaudeurge, Jean-Michel, 83170 Tourves (FR)
(74) Mandataire: Lavoix

(56) Documents cités:
- EP-A2- 2 684 764
- WO-A1-2007/033562
- ES-A1- 2 253 093
- US-A1- 2007 001 410
- US-A1- 2010 072 731
- US-B1- 6 938 906

## Description

La présente invention concerne un accessoire pour poussette. L'invention concerne également un ensemble formant poussette double, comportant une poussette et un tel accessoire.

Qu'il s'agisse de faire face à une naissance gémellaire ou bien à la naissance d'enfants d'âge rapproché, le transport conjoint de deux très jeunes enfants en poussette par un seul parent constitue une problématique à laquelle ne sont apportées jusqu'à maintenant que des solutions, détaillées ci-dessous, qui sont toutes basées sur l'idée de fournir une poussette double en « grossissant » une poussette solo, c'est-à-dire une poussette à une seule place permanente, dont le châssis repose classiquement sur deux roues arrière fixes et une ou deux roues avant pivotantes et dont la conduite est opérée par un utilisateur qui se tient debout derrière le châssis afin de solliciter ce dernier en mouvement pour avancer et afin de commander le blocage en roulement des roues arrière pour immobiliser la poussette solo. Ces solutions existantes de poussette double sont peu satisfaisantes, en étant notamment ni pratiques, ni confortables, voire dangereuses.

En effet, une première solution consiste en des poussettes doubles dans lesquelles les deux enfants à transporter sont installés côte à côte. Cette approche implique nécessairement un élargissement substantiel de la poussette double, même en limitant à son minimum la largeur individuelle de la zone d'installation de chacun des deux enfants, ce qui nuit d'ailleurs grandement à leur confort et complique voire interdit d'implanter des sièges premier âge ou des nacelles premier âge. En service, l'utilisation d'une telle poussette double est impossible dans un passage étroit, notamment un trottoir de faible largeur. De plus, comme la voie entre les roues gauche et droite de la poussette double est très grande et que le poids de cette poussette double est substantiel, cette dernière est peu maniable, malgré le recours à un guidon arrière qui court de manière continue sur toute la largeur de la poussette double. Par ailleurs, les manipulations de pliage et de dépliage sont tellement fastidieuses que l'utilisateur renonce généralement à les mettre en œuvre, ce qui fait que la poussette double reste encombrante même lorsqu'elle n'est pas utilisée.

Une deuxième solution consiste en des poussettes doubles dans lesquelles les deux enfants à transporter sont en tandem, c'est-à-dire l'un derrière l'autre, parfois en face à face, et à la même hauteur. Dans ce cas, les zones respectives d'installation des deux enfants peuvent être prévues larges et sont indépendantes l'une de l'autre, ce qui est confortable pour les enfants et autorise l'implantation de tout type de siège et de nacelle recevant chacun des deux enfants. Toutefois, cette approche conduit nécessairement à ce que le châssis de la poussette double soit fortement allongé : cela oblige à renforcer notablement la résistance structurelle du châssis, en ajoutant notamment des barres de renfort s'étendant dans la direction antéropostérieure du châssis, ce qui alourdit considérablement le châssis et, de nouveau, complique les manipulations de pliage et de dépliage. En service, l'empattement entre les roues avant et les roues arrière de la poussette double est si grand que la maniabilité de cette poussette double est médiocre, même en ayant recours à un artifice consistant à remplacer le traditionnel guidon par des poignées en forme de volant. De plus, ce genre de poussette double ne peut franchir un trottoir qu'au prix d'opérations fastidieuses, voire dangereuses : en effet, eu égard au grand empattement du châssis, il est impossible pour l'utilisateur de faire décoller les roues avant en basculant légèrement l'arrière de la poussette double vers l'arrière autour de l'axe de rotation des roues arrière appuyées contre le sol, si bien que pour monter un trottoir, l'utilisateur doit généralement lâcher le guidon, puis se placer à l'avant de la poussette double et se baisser pour en soulever l'avant jusqu'à faire reposer les roues avant sur le niveau haut du trottoir, avant de retourner à l'arrière de la poussette pour reprendre en main le guidon.

Une troisième solution consiste en des poussettes doubles dans lesquelles les deux enfants à transporter sont l'un derrière l'autre en étant semi-superposés. Selon cette approche, le châssis de la poussette double est prévu pour, en plus de supporter un siège ou une nacelle principal à une première hauteur conventionnelle, supporter, généralement dans la partie avant du châssis, un siège ou une nacelle secondaire qui est fixé, souvent de façon amovible, au châssis à une seconde hauteur beaucoup plus basse que la première hauteur. Outre, le fait que l'enfant installé dans le siège ou la nacelle secondaire, ainsi que ses parents, apprécient généralement très modérément sa situation au ras des pots d'échappement des voitures, on notera surtout que, là encore, le châssis de la poussette double doit nécessairement être rallongé et renforcé, donc alourdi, par rapport à une poussette solo. On retrouve donc les mêmes impacts négatifs concernant la maniabilité et la sécurité en service, ainsi que la praticité au pliage.

En dehors des différentes solutions de poussette double, listées ci-dessus, il est connu de pouvoir véhiculer deux enfants par une poussette solo dès lors que cette dernière est équipée d'une planche complémentaire, parfois désignée sous le terme anglais de « board » ou de « kiddy board ». Cette planche comprend un châssis formant plateforme, qui est pourvu de roues et qui est prévu pour être connecté de manière réversible à la partie arrière du châssis de la poussette solo. Une fois connectée, la planche roule sur le sol, tout en étant entraînée par la poussette qui est poussée par un utilisateur adulte. L'ensemble, formé de la poussette et de la planche connectée à cette dernière, permet de transporter à la fois un premier enfant, installé dans la poussette, et un second enfant, généralement plus âgé que le premier enfant, se tenant debout sur la plateforme du châssis de la planche, tandis que l'adulte, placé derrière la plateforme, tend les bras pour pousser l'ensemble en sollicitant le guidon ou les poignées, prévus à l'arrière de la poussette solo. Une telle planche est par exemple détaillée dans WO 2018/050303. En pratique, l'utilisation d'une telle planche n'est possible que si le second enfant transporté est suffisamment âgé pour se tenir correctement seul sur la planche. Plus globalement, une telle planche et la poussette solo à laquelle cette planche est connectée ne forment pas une poussette double, qui pourrait accueillir deux enfants en tandem dans des conditions de confort respectives similaires et qui pourrait être conduite par un utilisateur adulte se tenant debout à l'arrière de la poussette double pour la pousser afin d'avancer et pour en commander le blocage en roulement afin de l'immobiliser.

Enfin, WO 2007/033562, qui peut être considéré comme l'état de la technique le plus proche de l'invention, propose, sans grand détail, de rapporter de manière amovible un cadre de poussette additionnel à l'arrière d'une poussette principale, pour former une poussette double. Ce document prévoit que les châssis respectifs de la poussette principale et du cadre de poussette additionnel soient solidarisés rigidement l'un à l'autre, ce qui induit au moins les mêmes inconvénients que la solution en tandem évoquée plus haut.

Le but de la présente invention est de proposer un nouvel accessoire pour poussette, qui, à partir d'une poussette solo, forme une poussette double qui, sans renier sur le confort des deux enfants à transporter et sur la modularité des sièges et/ou nacelles utilisés, soit pratique, maniable et sûr.

A cet effet, l'invention a pour objet un accessoire pour poussette, tel que défini à la revendication 1.

L'invention a également pour objet un ensemble formant poussette double, tel que défini à la revendication 17.

Ainsi, l'invention est en rupture avec les approches existantes, en ce que l'invention propose de former une poussette double en associant une poussette solo, notamment une poussette solo existante, et un accessoire qui est rapporté, en tant que dispositif complémentaire, à cette poussette solo. La poussette et l'accessoire ont chacun leur propre châssis et ces deux châssis peuvent être connectés l'un derrière l'autre par un mécanisme de connexion réversible, porté par l'accessoire et conçu pour solidariser de façon amovible les deux châssis tout en autorisant entre eux un libre basculement autour d'un axe de basculement qui, en service, est horizontal et perpendiculaire à la direction antéropostérieure de la poussette double. En plus d'accueillir, avantageusement de façon interchangeable, un organe de réception d'un premier enfant, tel qu'un siège ou une nacelle, et de reposer sur le sol par au moins une roue avant pivotante, voire deux roues avant pivotantes, et par deux roues arrière fixes, c'est-à-dire non pivotantes, le châssis de la poussette dispose d'un organe de poussée à l'arrière, ainsi que d'un système de blocage en roulement qui, par interférence avec au moins l'une des roues arrière, permet de bloquer cette dernière en rotation pour immobiliser la poussette ; dans le même temps, le châssis de l'accessoire accueille, également de façon avantageusement interchangeable, son propre organe de réception d'un second enfant, tel qu'un siège ou une nacelle, et est pourvu, à l'arrière, de son propre organe de poussée, tout en reposant sur le sol par deux roues pivotantes tandis que, à l'avant, le châssis de l'accessoire est pourvu du mécanisme de connexion pour se connecter à la partie arrière du châssis de la poussette, ce mécanisme de connexion permettant, en service, de solidariser les deux châssis en tandem tout en autorisant leur libre basculement rotatif autour de l'axe de basculement précité. De plus, à l'arrière de l'accessoire, le châssis de ce dernier est également pourvu d'un organe d'actionnement permettant d'actionner un mécanisme de commande prévu à l'avant du châssis de l'accessoire afin de pouvoir y coopérer avec le système de blocage en roulement de la poussette de façon à commander ce système de blocage et, par-là, à commander un blocage en roulement de la poussette double.

La maniabilité de la poussette double selon l'invention est remarquable. En effet, pour faire changer à la poussette double sa direction d'avancée, l'utilisateur, qui se tient debout derrière la poussette double, impulse une commande directionnelle correspondante sur l'organe de poussée de l'accessoire, ce qui oriente la ou les roues avant pivotantes de la poussette dans la direction voulue tandis que, par un effet similaire à celui d'un différentiel, procuré par les roues arrière fixes de la poussette, les roues pivotantes de l'accessoire s'orientent en direction opposée à la direction d'orientation des roues avant de la poussette : pour l'utilisateur, le ressenti directionnel est au moins aussi fluide que le pilotage d'une poussette solo à deux roues arrière fixes et à une ou deux roues avant pivotantes, malgré le poids sensiblement doublé que doit nécessairement pousser l'utilisateur de la poussette double et qui est majoritairement supporté par les roues arrière fixes de la poussette de sorte que ces dernières reçoivent efficacement toute poussée de changement de direction que l'utilisateur applique à l'organe de poussée de l'accessoire, et répercutent cette poussée dans des directions respectives opposées aux roues de l'accessoire et à la ou aux roues avant de la poussette, à la façon d'un différentiel. De plus, lorsque la poussette double selon l'invention doit franchir un obstacle transversal, tel qu'un trottoir, la poussette double se comporte longitudinalement à la manière d'une chenille pour franchir aisément cet obstacle : par exemple, pour monter sur un trottoir ou similaire, qui s'étend transversalement à l'avant de la poussette double, l'utilisateur, qui se tient juste derrière l'organe de poussée de l'accessoire, pousse la poussette double jusqu'à ce que les roues avant de la poussette soient à proximité immédiate du trottoir, voire en butée contre ce dernier ; puis, sans lâcher par une main l'organe de poussée de l'accessoire, l'utilisateur se saisit de l'organe de poussée de la poussette par son autre main, le cas échéant en se plaçant sur le côté droit ou sur le côté gauche de l'accessoire ; l'utilisateur peut alors, en sollicitant manuellement l'organe de poussée de la poussette légèrement vers le bas et vers l'arrière, faire basculer le châssis de la poussette autour de l'axe de basculement précité de manière à décoller du sol la ou les roues avant de la poussette tout en maintenant les roues arrière de la poussette appuyées sur le sol, ce basculement se faisant par rapport au châssis de l'accessoire dont les roues sont restées au contact du sol ; par poussée vers l'avant sur l'organe de poussée de l'accessoire, l'utilisateur peut alors faire avancer la poussette double par roulement des roues arrière de la poussette et des roues de l'accessoire, jusqu'à ce que les roues avant de la poussette soient à l'aplomb du trottoir ; l'utilisateur peut ensuite relâcher la sollicitation qu'il exerçait jusqu'alors sur l'organe de poussée de la poussette, ce qui ramène la ou les roues avant de la poussette au contact du sol, au niveau haut du trottoir ; l'utilisateur peut ensuite pousser vers l'avant l'organe de poussée de l'accessoire, le cas échéant après s'être replacé derrière ce dernier, jusqu'à ce que les roues arrière de la poussette viennent à proximité du trottoir, voire en butée contre ce dernier ; l'utilisateur peut alors, en sollicitant manuellement l'organe de poussée de l'accessoire légèrement vers le bas et vers l'arrière, faire basculer le châssis de l'accessoire de manière à décoller du sol les roues arrière de la poussette tout en maintenant les roues de l'accessoire appuyées sur le sol, le châssis de la poussette ne gênant pas ce basculement du châssis de l'accessoire moyennant son libre basculement par rapport à ce dernier autour de l'axe de basculement précité ; par poussée vers l'avant sur l'organe de poussée de l'accessoire, l'utilisateur peut faire avancer la poussette double à la fois par roulement des roues de l'accessoire sur le niveau bas du trottoir et par roulement des roues avant de la poussette sur le niveau haut du trottoir, jusqu'à ce que les roues arrière de la poussette soient à l'aplomb du trottoir ; l'utilisateur peut alors relâcher la sollicitation qu'il exerçait sur l'organe de poussée de l'accessoire, ce qui ramène les roues arrière de la poussette au contact du sol, au niveau haut du trottoir ; l'utilisateur peut ensuite pousser vers l'avant l'organe de poussée de l'accessoire, jusqu'à ce que les roues de l'accessoire viennent à proximité du trottoir, voire en butée contre ce dernier ; l'utilisateur n'a plus alors qu'à pousser l'organe de poussée de l'accessoire, si besoin en le soulevant légèrement vers le haut, pour que les roues de l'accessoire grimpent sur le trottoir et se retrouvent à leur tour au niveau haut du trottoir, avec basculement du châssis de l'accessoire par rapport au châssis de la poussette dont les roues avant et arrière reposent sur le niveau haut du trottoir. Le franchissement d'un obstacle est donc aisé pour l'utilisateur, qui n'a besoin d'aucune aide extérieure et qui maintient en permanence une main sur l'organe de poussée de l'accessoire, ce qui est particulièrement sûr.

La sécurité en blocage de la poussette double selon l'invention est elle aussi remarquable. En effet, dès lors que l'utilisateur souhaite immobiliser la poussette double, l'utilisateur, qui se tient derrière la poussette double, active l'organe d'actionnement prévu à l'arrière du châssis de l'accessoire, ce qui, de par la liaison entre cet organe d'actionnement et le mécanisme de commande prévu à l'avant du châssis de l'accessoire, actionne ce mécanisme de commande qui, à son tour, applique une commande appropriée sur le système de blocage en roulement de la poussette pour que ce système de blocage bloque en rotation les roues arrière de la poussette : la poussette double se retrouve alors efficacement bloquée en roulement car les roues de la poussette double qui sont bloquées en rotation par interférence sont celles qui supportent majoritairement le poids transporté, à savoir les roues arrière de la poussette, et ce quel que soit le cas de chargement de la poussette double, c'est-à-dire quelle que soit la présence effective et le poids respectif des deux enfants respectivement installables dans l'accessoire et dans la poussette.

Comme la connexion entre la poussette et l'accessoire de la poussette double est réversible, il est possible, lorsque cela est souhaité par l'utilisateur, de déconnecter l'accessoire de la poussette : la poussette peut continuer d'être utilisée seule, en tant que poussette solo, pour transporter un enfant, l'utilisateur se plaçant alors debout derrière la poussette solo pour la pousser afin d'avancer et pour y actionner son système de blocage en roulement afin de l'immobiliser ; dans le même temps, l'accessoire n'est plus fonctionnel pour transporter un enfant, notamment du fait que l'avant du châssis de l'accessoire est dépourvu de roues ou d'organes de roulement au sol similaires, mais l'accessoire reste prêt à être rapporté à la poussette solo pour reformer la poussette double, la connexion/déconnexion entre eux pouvant même être instantanée grâce au mécanisme de connexion avantageusement prévu actionnable d'une seule main par l'utilisateur, comme expliqué plus en détail par la suite.

De même, l'accessoire conforme à l'invention peut avantageusement être prévu pliable pour occuper moins de place et, le cas échéant, être transporté par l'utilisateur de la poussette lorsque cette dernière est utilisée en tant que poussette solo, l'accessoire plié pouvant être tenu à la main par l'utilisateur ou accroché à son épaule par une sangle ou bien pouvant être accroché à l'arrière du châssis de la poussette également par un dispositif ad hoc. Bien entendu, dès lors que la poussette est également pliable, on comprend que l'ensemble formant poussette double conforme à l'invention peut être rendu particulièrement compact, sous forme de l'accessoire plié et de la poussette pliée, chacun d'eux pouvant être, par exemple, admis en tant que bagage cabine à bord d'un avion de ligne.

Un aspect optionnel avantageux de l'accessoire conforme à l'invention, relatif à un mécanisme de blocage, est défini à la revendication 2. Grâce à ce mécanisme de blocage, le blocage en roulement de la poussette double est amélioré, dans le sens où, en plus du blocage en roulement, que l'on peut qualifier de blocage principal et qui est assuré par le système de blocage de la poussette commandé par le mécanisme de commande de l'accessoire, le mécanisme de blocage intégré à l'accessoire assure un blocage en roulement complémentaire pour la poussette double. Ainsi, quand bien même la poussette double se retrouverait dans des situations d'utilisation exceptionnelles, telles que des pentes fortement inclinées ou très accidentées, le blocage des roues de l'accessoire par le mécanisme de blocage renforce le blocage en roulement de la poussette double, qui reste principalement assuré par le blocage des roues arrière de la poussette, sous l'action du système de blocage intégré à cette poussette. Pour l'utilisateur, la mise en oeuvre du blocage des roues de l'accessoire n'implique aucune contrainte, puisque l'actionnement du mécanisme de blocage de l'accessoire est opéré conjointement à celui du mécanisme de commande de l'accessoire, en sollicitant exclusivement l'organe d'actionnement à l'arrière de l'accessoire. Ainsi, dès lors que l'utilisateur souhaite immobiliser la poussette double, l'utilisateur, qui se tient derrière la poussette double, active l'organe d'actionnement prévu à l'arrière du châssis de l'accessoire, ce qui actionne simultanément le mécanisme de commande, comme expliqué plus haut, et le mécanisme de blocage agissant sur les roues de l'accessoire.

Des caractéristiques additionnelles avantageuses du mécanisme de blocage de l'accessoire sont prévues aux revendications 3 à 8.

D'autres caractéristiques additionnelles avantageuses de l'accessoire ou de l'ensemble formant poussette double, conformes à l'invention, sont prévues aux autres revendications.

L'invention sera mieux comprise à la lecture de la description qui va suivre, donnée uniquement à titre d'exemple et faite en se référant aux dessins sur lesquels :
- La figure 1 est une vue en perspective d'un ensemble formant poussette double conforme à l'invention ;
- La figure 2 est une vue similaire à la figure 1, dans une direction d'observation différente de celle de la figure 1 ;
- La figure 3 est une vue en perspective d'un accessoire conforme à l'invention et appartenant à l'ensemble formant poussette double des figures 1 et 2, cet accessoire étant montré seul sur la figure 3 ;
- La figure 4 est une vue en perspective montrant à la fois l'arrière d'une poussette appartenant à l'ensemble formant poussette double des figures 1 et 2 et l'avant de l'accessoire de la figure 3, cette poussette et cet accessoire étant déconnectés l'un de l'autre ;
- La figure 5 est une vue similaire à la figure 4, illustrant une étape mise en oeuvre pour connecter la poussette et l'accessoire l'un à l'autre ;
- La figure 6 est une vue en élévation selon la flèche VI de la figure 4, illustrant la poussette et l'accessoire connectés l'un à l'autre et montrant l'accessoire en traits pleins tandis que la poussette est montrée uniquement partiellement et en pointillés ;
- La figure 7 est une vue similaire à la figure 6, illustrant un basculement relatif entre la poussette et l'accessoire ;
- La figure 8 est une vue similaire à la figure 6, illustrant l'actionnement d'un système de blocage en roulement de la poussette ;
- La figure 9 est une vue en perspective, qui est similaire à la figure 2 et qui montre l'utilisation de l'ensemble formant poussette double lorsque la direction d'avancée de cet ensemble formant poussette double est modifiée ;
- La figure 10 est une vue en élévation selon la flèche X de la figure 9 ;
- La figure 11 est une vue en élévation de l'accessoire de la figure 3, montré dans une configuration pliée ;
- La figure 12 est une vue similaire à la figure 11, selon une direction d'observation différente de celle de la figure 11 ;
- La figure 13 est une vue similaire aux figures 11 et 12, selon une direction d'observation qui est différente de celle des figures 11 et 12 ;
- La figure 14 est une coupe partielle selon le plan XIV de la figure 1 ;
- La figure 15 est une coupe partielle selon la ligne XV-XV de la figure 14 ;
- La figure 16 est une vue similaire à la figure 14, illustrant l'actionnement d'un mécanisme de blocage de l'accessoire ;
- La figure 17 est une vue similaire à la figure 16 ; et
- La figure 18 est une vue similaire à la figure 15, illustrant l'accessoire dans son état de la figure 17.

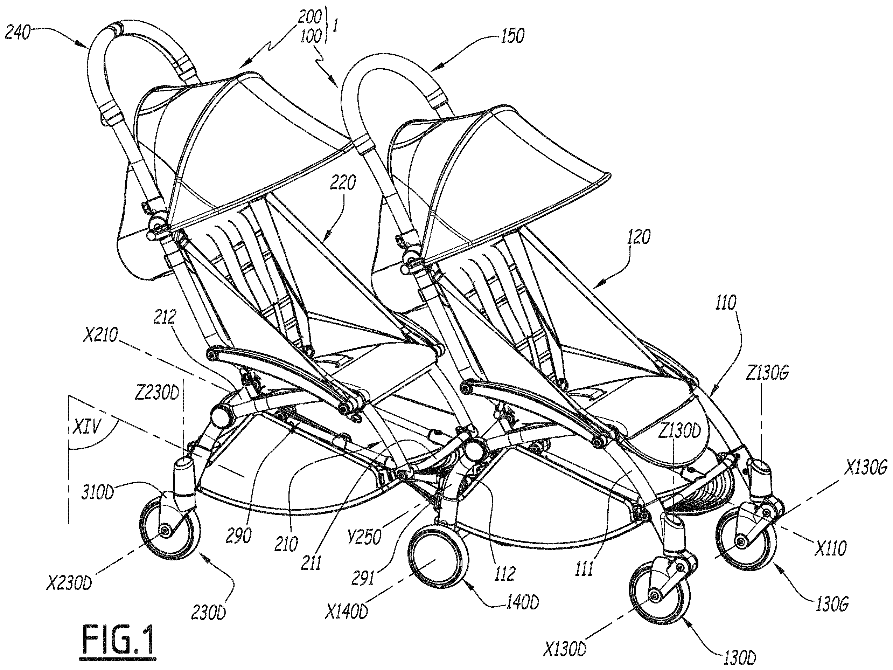

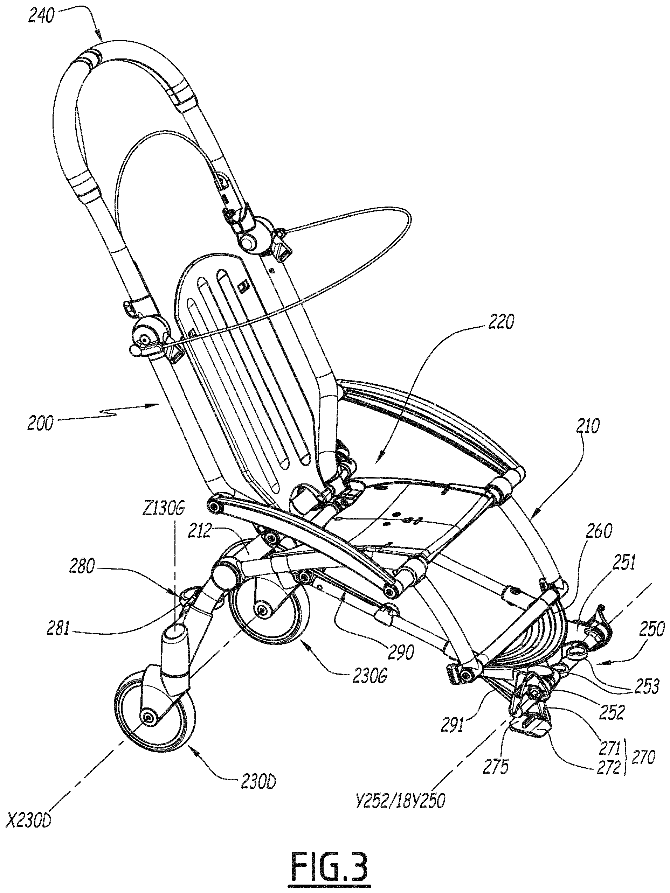

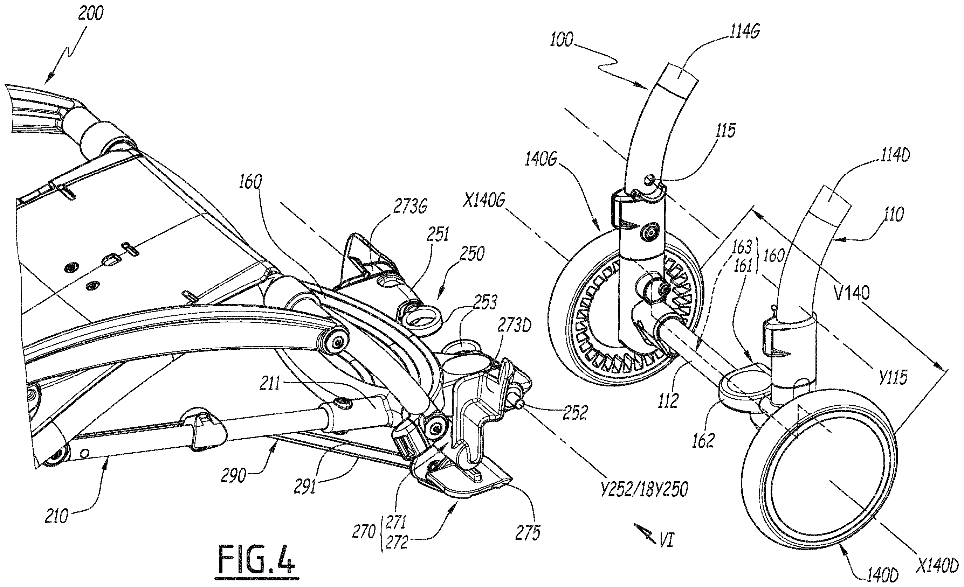

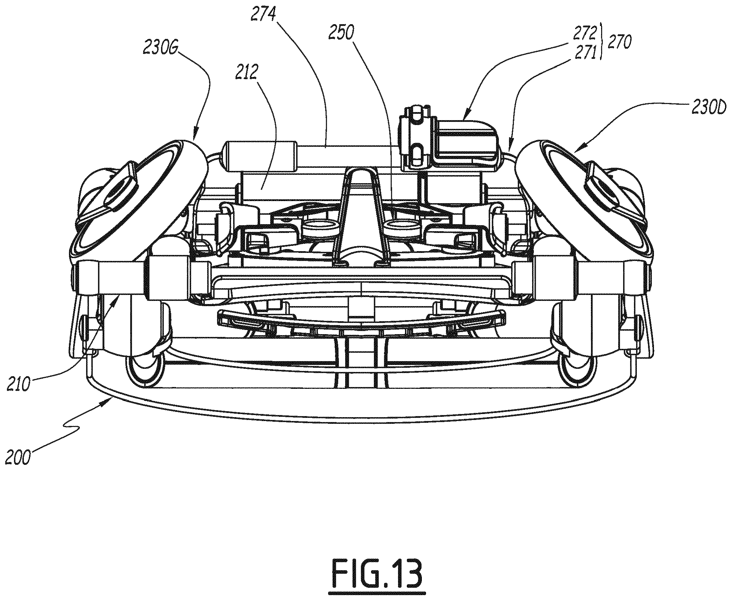

Sur les figures 1, 2, 9 et 10 est représentée une poussette double 1 formée d'un ensemble constitué d'une poussette 100 et d'un accessoire 200 pour poussette. Sur les figures 4 à 8, la poussette 100 et l'accessoire 200 ne sont montrés que partiellement. Sur les figures 3 et 11 à 13, seul l'accessoire 200 est montré. La poussette 100 et l'accessoire 200 vont être détaillés ci-après l'un après l'autre.

La poussette 100 comporte un châssis 110 qui définit un axe antéropostérieur X110. L'axe antéropostérieur X110 s'étend entre une région avant du châssis 110, qui est tournée vers l'avant lorsque la poussette 100 est poussée vers l'avant, et une région arrière du châssis, qui est opposée à la région avant précitée et qui est donc tournée vers l'arrière lorsque la poussette 100 est poussée vers l'avant. De plus, l'axe antéropostérieur X110 est situé sensiblement au milieu du châssis 110 dans le sens où cet axe antéropostérieur s'étend à sensiblement même distance du côté latéral gauche et du côté latéral droit du châssis 110.

Dans l'exemple de réalisation considéré sur les figures, le châssis 110 présente une structure tubulaire, réalisée principalement par assemblage de tubes. Cette structure tubulaire est avantageusement repliable sur elle-même pour passer le châssis 110 entre une configuration déployée de service, telle que montrée sur les figures 1, 2 et 4 à 10, et une configuration repliée de stockage. A cet égard, le lecteur pourra par exemple se référer à WO 2010/000987 pour connaître des détails possibles de réalisation correspondants.

Quelle que soit sa forme de réalisation, le châssis 110 est conçu pour, en service, supporter un organe de réception 120 permettant de réceptionner un premier enfant à transporter par la poussette double 1, ce premier enfant étant installé dans cet organe de réception 120 en position assise, en position couchée ou dans une position intermédiaire entre ces dernières. Ainsi, l'organe de réception 120 est choisi parmi un siège, une nacelle, un couffin, etc., la forme de réalisation de l'organe de réception 120 n'étant pas limitative de l'invention. D'ailleurs, de manière connue en soi et non détaillée ici, le châssis 110 est avantageusement prévu pour permettre d'interchanger l'organe de réception 120, notamment selon l'âge du premier enfant à transporter.

La poussette 100 comporte également des roues qui, en service, s'appuient et roulent sur le sol, en étant agencées dans la région basse du châssis 110 afin de supporter ce dernier.

Parmi les roues de la poussette 100, on trouve une roue avant gauche 130G et une roue avant droite 130D. Chacune de ces roues 130G et 130D définit un axe de rotation, respectivement gauche X130G et droit X130D, autour duquel la roue tourne sur elle-même pour rouler sur le sol. En service, les axes de rotation X130G et X130D s'étendent de manière sensiblement parallèle au sol. La roue avant gauche 130G est montée sur une portion gauche d'une partie avant 111 du châssis 110, en étant reliée à cette portion gauche de manière librement pivotante autour d'un axe de pivotement Z130G qui s'étend de manière radiale ou orthoradiale à l'axe de rotation X130G de la roue avant 130G, de façon que la roue avant gauche 130G puisse, indépendamment de son roulement autour de son axe de rotation X130G, pivoter autour de l'axe de pivotement Z130G et ainsi modifier l'orientation de la roue par rapport au châssis 110 et donc la direction de progression pour le châssis 110 sur le sol. La roue avant gauche 130G peut ainsi être qualifiée de « roue pivotante », parfois appelée « roue folle ». De même, la roue avant droite 130D est montée sur une portion droite de la partie avant 111 du châssis 110, en étant reliée à cette portion droite de manière librement pivotante autour d'un axe de pivotement Z130D, qui s'étend de manière radiale ou orthoradiale à l'axe de rotation X130D de la roue avant droite 130D et qui est sensiblement parallèle à l'axe de pivotement Z130G. Pour améliorer la maniabilité des roues 130G et 130D, leur axe de pivotement Z130G et Z130D n'est pas concourant avec leur axe de rotation X130G, X130D, mais est avantageusement décalé de cet axe, de sorte que le pivotement de chaque roue est déporté par rapport à l'axe de rotation de la roue. En pratique, l'agencement et les aménagements intrinsèques des roues 130G et 130D ne sont pas limitatifs du moment que ces roues soient pivotantes et prévues à l'avant du châssis 110.

Egalement parmi les roues de la poussette 100, on trouve une roue arrière gauche 140G et une roue arrière droite 140D. Les roues arrière gauche 140G et droite 140D définissent respectivement un axe de rotation gauche X140G et un axe de rotation droit X140D, respectivement autour desquels la roue correspondante tourne pour rouler sur le sol et qui, en service, s'étend de manière sensiblement parallèle au sol. La roue arrière gauche 140G est montée sur une portion gauche d'une partie arrière 112 du châssis 110, en étant reliée à cette portion gauche de manière fixe, c'est-à-dire de manière non pivotante comparativement aux roues avant 130G et 130D. De même, la roue arrière droite 140D est montée sur une portion droite de la partie arrière 112 du châssis 110, en étant reliée à cette portion droite de manière fixe. Dans l'exemple de réalisation considéré sur les figures, les axes de rotation gauche X140G et droit X140D sont alignés, les roues arrière gauche 140G et droite 140D formant ainsi un train de roues arrière fixes, centré sur un même axe de rotation.

Comme indiqué sur la figure 4, on note V140 la voie qui sépare les roues arrière gauche 140G et droite 140D dans une direction perpendiculaire à l'axe antéropostérieur X110.

La poussette 100 comporte en outre un organe de poussée 150 qui est porté solidairement par la partie arrière 112 du châssis 110, en région haute de cette partie arrière. En service, l'organe de poussée 150 est situé à la hauteur des mains d'un utilisateur adulte, se tenant debout, positionné derrière la poussette 100 et, le cas échéant, décalé à gauche ou à droite de l'axe antéropostérieur X110. L'organe de poussée 150 permet à l'utilisateur d'appliquer au châssis 110 une sollicitation manuelle visant notamment soit à pousser le châssis 110 vers l'avant, en faisant rouler le châssis sur le sol par les roues 130G, 130D, 140G et 140D, soit à soulever légèrement la région arrière du châssis 110 de manière à décoller les roues arrière 140G et 140D vis-à-vis du sol, tout en maintenant les roues avant 130G et 130D au contact du sol, soit encore à faire légèrement décoller les roues avant 130G et 130D vis-à-vis du sol par basculement de la région arrière du châssis 110 vers l'arrière et vers le bas, tout en maintenant les roues arrière 140G et 140D au contact du sol. L'organe de poussée 150 est, par exemple, réalisé sous forme d'une barre, de poignée, etc. Plus globalement, la forme de réalisation de l'organe de poussée 150 n'est pas limitative de l'invention.

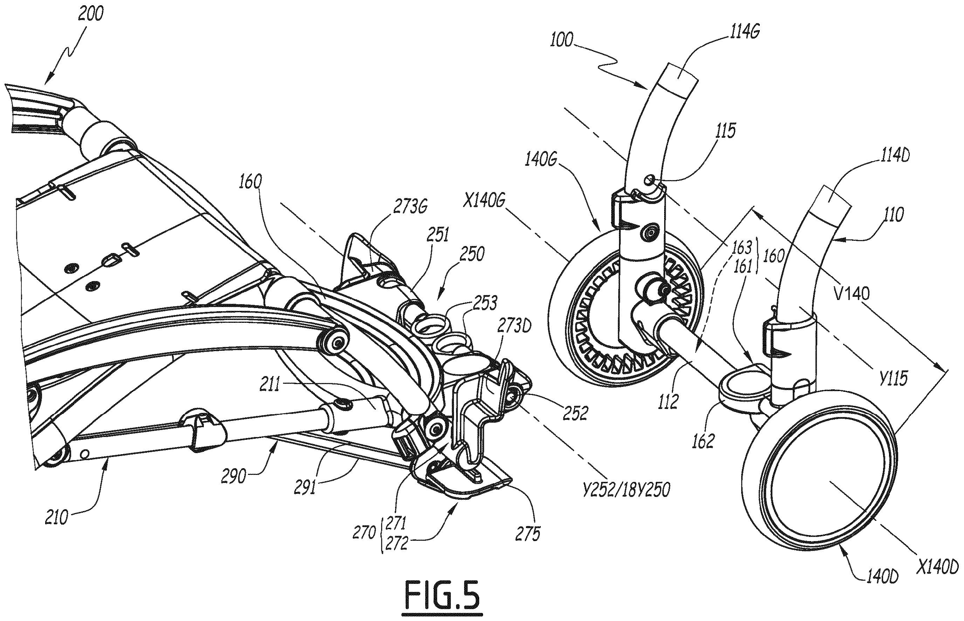

La poussette 100 comporte également un système de blocage en roulement 160, qui est porté par le châssis 110 et qui permet d'immobiliser la poussette 100 en bloquant ses roues arrière 140G et 140D en rotation autour de leur axe de rotation X140G, X140D. Ce système de blocage en roulement 160 est conçu pour être sollicité par un utilisateur se tenant derrière la poussette 100 et comporte à cet effet une pièce d'actionnement 161 portée par la partie arrière 112 du châssis 110 de manière à pouvoir être activée, par exemple au pied ou à la main, par l'utilisateur. Dans l'exemple de réalisation considéré sur les figures, la pièce d'actionnement 161 comporte, voire consiste en une pédale 162 basculante, comme bien visible sur les figures 4 et 5. De plus, le système de blocage en roulement 160 comporte un mécanisme de blocage 163, qui permet de bloquer la rotation des roues arrière 140G et 140D en interférant avec ces dernières et qui est actionné de manière réversible par la pièce d'actionnement 161 : ce mécanisme de blocage 163, qui n'est pas détaillé sur les figures et qui est dessiné en pointillés de manière schématique sur les figures 4 et 5, est conçu pour déplacer, par rapport à l'une et/ou l'autre des roues arrière 140G et 140D, un élément bloqueur, associé à la roue correspondante, le ou chaque élément bloqueur étant ainsi déplacé entre une position de blocage, dans laquelle l'élément bloqueur coopère en butée, en particulier selon une direction périphérique à l'axe de rotation X140G, X140D de la roue associée, avec un relief de cette roue de manière à interdire à la roue de rouler quelle que soit la position angulaire de cette roue autour de son axe de rotation, et une position de déblocage, dans laquelle l'élément bloqueur n'interfère pas avec le relief précité de la roue associée. Le déplacement du ou des éléments bloqueurs précités par le mécanisme de blocage 163 est ainsi commandé par la pièce d'actionnement 161. Des détails de réalisation d'un exemple d'un tel mécanisme de blocage 163 sont donnés dans WO 2011/148062 auquel le lecteur peut se référer. Bien entendu, cette forme de réalisation du mécanisme de blocage 163, tout comme la forme de réalisation de la pièce d'actionnement 161 ne sont pas limitatives de l'invention du moment que ce mécanisme de blocage, commandé par la pièce d'actionnement, permette d'interférer avec l'une et/ou l'autre des roues arrière 140G et 140D de manière à bloquer ces dernières en rotation, de manière réversible.

D'autres caractéristiques de la poussette 100 seront décrites plus loin, après que l'accessoire 200 ait été décrit à son tour.

L'accessoire 200 comporte un châssis 210 qui définit un axe antéropostérieur X210 s'étendant entre des régions respectivement avant et arrière du châssis 210, qui sont tournées respectivement vers l'avant et vers l'arrière lorsque l'accessoire 200 est déplacé vers l'avant en service. Cet axe antéropostérieur X210 est situé à sensiblement même distance des côtés latéraux respectivement gauche et droit du châssis 210.

Dans la forme de réalisation considérée sur les figures, le châssis 210 présente une structure tubulaire, en étant par exemple réalisée principalement par assemblage de tubes. Un intérêt de cette structure tubulaire sera donné plus loin. Ceci étant, d'autres formes de réalisation sont envisageables pour le châssis 210, la structure tubulaire précitée n'étant pas limitative de l'invention.

L'accessoire 200 comporte un organe de réception 220 qui, en service, est supporté par le châssis 210. L'organe de réception 220 permet de réceptionner un second enfant à transporter par la poussette double 1, c'est-à-dire un enfant autre que celui transporté dans la poussette 100, ce second enfant étant installé dans l'organe de réception 220 en position assise, en position couchée ou dans une position intermédiaire entre ces dernières. En pratique, l'organe de réception 220 est un siège, une nacelle, un couffin, etc. Suivant des considérations similaires à celles développées plus haut pour l'organe de réception 120, l'organe de réception 220 est avantageusement supporté par le châssis 210 de manière interchangeable, permettant ainsi de faire évoluer la nature de l'organe de réception 220 selon l'âge du second enfant à transporter par la poussette double 1. Dans tous les cas, on notera que l'organe de réception 120 et l'organe de réception 220 sont indépendants l'un de l'autre, dans le sens où les natures respectives de ces deux organes de réception sont indifférentes l'une de l'autre.

L'accessoire 200 comporte en outre des roues gauche 230G et droite 230D. Ces roues, respectivement gauche 230G et droite 230D, définissent des axes de rotation, respectivement gauche X230G et droit X230D, autour desquels la roue correspondante tourne sur elle-même pour rouler sur le sol. La roue 230G est montée sur une portion gauche d'une partie arrière 212 du châssis 210, en étant reliée à cette portion gauche de manière librement pivotante autour d'un axe de pivotement Z230G qui s'étend de manière radiale ou orthoradiale à l'axe de rotation gauche X230G, de façon que la roue gauche 230G puisse, indépendamment de son roulement autour de son axe de rotation X230G, pivoter librement autour de l'axe de pivotement Z230G et ainsi modifier l'orientation de la roue gauche 230G par rapport au châssis 210 et donc la direction de progression pour le châssis 210 sur le sol. De même, la roue droite 230D est montée sur une portion droite de la partie arrière 212 du châssis 210, en étant reliée à cette portion droite de manière librement pivotante autour d'un axe de pivotement Z230D s'étendant de manière radiale ou orthoradiale à l'axe de rotation droit X230D et de manière sensiblement parallèle à l'axe de pivotement gauche Z230G. Suivant des considérations similaires à celles développées plus haut pour les roues avant 130G et 130D, on comprend que les roues 230G et 230D peuvent être qualifiées de roues pivotantes ou de roues folles vis-à-vis du châssis 210. Pour améliorer la maniabilité des roues 230G et 230D, leur axe de pivotement Z230G et Z230D n'est pas concourant avec leur axe de rotation X230G, X230D, mais est avantageusement décalé de cet axe, de sorte que le pivotement de chaque roue 230G et 230D est déporté par rapport à son axe de rotation. Ceci étant, l'agencement et les aménagements intrinsèques des roues 230G et 230D ne sont pas limitatifs et peuvent différer de l'exemple de réalisation considéré sur les figures, du moment que ces roues 230G et 230D sont pivotantes et supportent la partie arrière 212 du châssis 210.

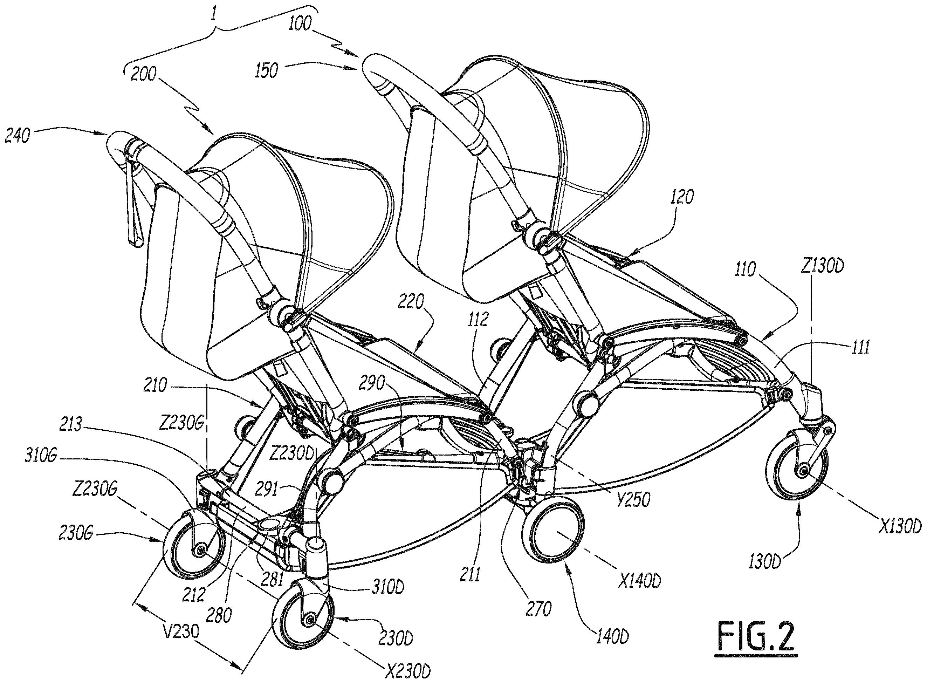

Comme indiqué sur la figure 2, les roues gauche 230G et droite 230D sont séparées l'une de l'autre, perpendiculairement à l'axe antéropostérieur X210, d'une voie V230.

L'accessoire 200 comporte en outre un organe de poussée 240 qui est porté solidairement par la partie arrière 212 du châssis 210, en région haute de cette partie arrière. En service, l'organe de poussée 240 est situé à la hauteur des mains d'un adulte se tenant et, le cas échéant, marchant derrière la poussette double 1, l'organe de poussée 240 permettant ainsi à l'utilisateur de solliciter manuellement le châssis 210 pour, notamment, pousser ce châssis 210 vers l'avant, soulever légèrement la région arrière de ce châssis 210 de manière à décoller du sol les roues 230G et 230D, ou encore basculer légèrement vers l'arrière et vers le bas la partie arrière 212 du châssis 210 tout en maintenant les roues 230G et 230D au contact du sol. En pratique, la forme de réalisation de l'organe de poussée 240 n'est pas limitative, cet organe de poussée 240 pouvant être une barre, des poignées, etc. Dans l'exemple de réalisation considéré sur les figures, les formes de réalisation respectives de l'organe de poussée 150 et de l'organe de poussée 240 sont identiques, mais il pourrait en être autrement.

L'accessoire 200 comporte en outre un mécanisme de connexion 250 permettant de connecter la poussette 100 et l'accessoire 200 l'un à l'autre de manière réversible et, le cas échéant, de manière instantanée comme expliqué plus loin. Comme bien visible sur les figures 1 à 8, le mécanisme de connexion 250 est porté par une partie avant 211 du châssis 210, en région basse de cette partie avant, et est conçu pour coopérer avec une région basse de la partie arrière 112 du châssis 110 pour solidariser de façon amovible la partie avant 211 du châssis 210 à la partie arrière 112 du châssis 110. La solidarisation entre les châssis 110 et 210 est ainsi opérée par le mécanisme de connexion 250 de manière que l'accessoire 200 soit agencé derrière la poussette 100 selon une direction antéropostérieure de la poussette double 1, qui s'étend parallèlement aux axes antéropostérieurs X110 et X210 des châssis 110 et 210. Les axes antéropostérieurs X110 et X210 sont d'ailleurs avantageusement alignés par le mécanisme de connexion 250, comme dans l'exemple de réalisation considéré sur les figures. De plus, comme indiqué sur les figures 1, 2 et 6 à 8, le mécanisme de connexion 250 est adapté, par des aménagements mécaniques ad hoc, pour définir un axe de basculement Y250 autour duquel la partie arrière 112 du châssis 110 et la partie avant 211 du châssis 210 basculent librement l'une par rapport à l'autre. Cet axe de basculement Y250 s'étend, en service, de manière sensiblement parallèle au sol et de manière sensiblement perpendiculaire à la direction antéropostérieure de la poussette double 1. Ainsi, en dehors des jeux intrinsèques au mécanisme de connexion 250, les châssis 110 et 210 sont liés fixement l'un à l'autre par le mécanisme de connexion 250 dans toutes les directions, excepté en basculement autour de l'axe de basculement Y250 autour duquel les châssis 110 et 210 sont librement déplaçables l'un par rapport à l'autre. Dans l'exemple de réalisation considéré sur les figures, l'axe de basculement Y250 s'étend ainsi parallèlement et à distance des axes de rotation X140G et X140D des roues arrière 140G et 140D.

En pratique, la forme de réalisation du mécanisme de connexion 250 n'est pas limitative de l'invention, du moment que ce mécanisme de connexion assure la solidarisation réversible entre la partie avant 211 du châssis 210 et la partie arrière 112 du châssis 110, tout en permettant un libre basculement entre elles autour de l'axe de basculement Y250. En particulier, quelle que soit la forme de réalisation du mécanisme de connexion 250, la poussette 100 et l'accessoire 200 peuvent, lorsque l'utilisateur le commande, être déconnectés l'un de l'autre comme cela est envisagé aux figures 3 à 5.

Dans l'exemple de réalisation considéré sur les figures, et comme plus particulièrement visible sur les figures 3 à 5, le mécanisme de connexion comporte une pièce d'appui 251 qui, en service, est liée fixement au châssis 210, en étant portée fixement, notamment à demeure, par la partie avant 211 du châssis 210. En particulier, suivant une forme de réalisation particulièrement avantageuse qui est mise en oeuvre ici, la pièce d'appui 251 est intégrée à demeure à un repose-pied 260 porté solidairement par la partie avant 211 du châssis 210. Le mécanisme de connexion 250 comporte également deux éléments mâles 252, à savoir un élément mâle gauche et un élément mâle droit, qui sont centrés sur un même axe géométrique Y252, étant remarqué que seul l'élément droit des éléments 252 est visible sur les figures 3 et 4 et que l'élément gauche est symétrique à l'élément droit par rapport à un plan géométrique qui, à la fois, est perpendiculaire à l'axe Y252 et contient l'axe antéropostérieur X210. Chacun des deux éléments mâles 252 est supporté par la pièce de support 251 de manière mobile par rapport au châssis 210, entre une position de connexion, qui est montrée sur les figures 3 et 4 et dans laquelle l'élément mâle 252 est déployé vis-à-vis de la pièce d'appui 251, et une position de déconnexion, qui est montrée sur la figure 5 et dans laquelle l'élément mâle est escamoté vis-à-vis de la pièce d'appui. Les éléments mâles 252 en position de connexion sont prévus pour coopérer avec la partie arrière 112 du châssis 110. Pour ce faire, la portion gauche de la partie arrière 112 du châssis 110 comporte un montant arrière gauche 114G et la portion droite de cette partie arrière 112 du châssis 110 comporte un montant arrière droit 114B, ces montants 114G et 114D étant parallèles l'un à l'autre, en s'étendant vers le haut respectivement depuis les roues arrière gauche 130G et droite 130D, comme bien visible sur les figures 4 et 5. De plus, les portions gauche et droite de la partie arrière 112 du châssis 110 sont chacune pourvues d'un logement femelle 115: ces deux logements femelles 115 sont centrés sur un même axe géométrique Y115, s'étendant perpendiculairement aux montants gauche 114G et droit 114D, et sont respectivement creusés dans une face du montant gauche 114G et dans une face du montant droit 114D, qui sont en regard l'une de l'autre, ces logements femelles 115 s'étendant respectivement à l'intérieur des montants 114G et 114D, avantageusement dans l'épaisseur d'un insert interne de ces montants, étant remarqué que seul le logement gauche des deux logements 115 est visible sur les figures 4 et 5 et que le logement droit est symétrique au logement gauche par rapport à un plan géométrique qui, à la fois, est perpendiculaire à l'axe Y115 et contient l'axe antéropostérieur X110. Lorsque le mécanisme de connexion est rapporté à la partie arrière 112 du châssis 110, en particulier entre les montants 114G et 114D, plus précisément au niveau des logements femelles 115, les éléments mâles 252 sont, en position de connexion, respectivement reçus dans ces logements femelles 115, tandis que les éléments mâles 252 sont, en position de déconnexion, hors des logements femelles 115. Chacun des éléments mâles 252 est prévu complémentaire, à des jeux fonctionnels près, du logement femelle 115 auxquels il est associé, de manière à être reçu dans ce logement femelle de manière complémentaire : en prévoyant que les éléments mâles 252 et les logements femelles 115 présentent une conformation cylindrique complémentaire, centrée sur leurs axes respectifs Y252 et Y115, ces éléments mâles, lorsqu'ils sont reçus dans les logements femelles, coopèrent avec ces logements femelles pour aligner leurs axes respectifs Y252 et Y115 et définir conjointement l'axe de basculement Y250 qui est alors confondu avec les axes alignés Y252 et Y115. Suivant une disposition pratique particulièrement avantageuse, les éléments mâles 252 sont mobiles en translation selon leur axe Y252, et donc selon l'axe de basculement Y250, entre leur position de connexion et leur position de déconnexion, notamment en se rapprochant l'un de l'autre lorsque ces éléments mâles sont translatés de leur position de connexion à leur position de déconnexion, comme bien visible par comparaison des figures 4 et 5. De plus, le mécanisme de connexion 250 comporte en outre des organes d'entraînement 253, à savoir un organe d'entraînement gauche et un organe d'entraînement droit, qui permettent d'entraîner respectivement les éléments mâles 252 de façon manuelle de leur position de connexion à leur position de déconnexion, ces organes d'entraînement étant avantageusement conformés pour être sollicité conjointement par une même main d'un utilisateur afin d'entraîner conjointement les deux éléments mâles. Le mécanisme de connexion 250 peut également comporter des organes élastiques qui assurent le rappel élastique des éléments mâles 252 de leur position de déconnexion à leur position de connexion, tout en maintenant élastiquement les éléments mâles dans leur position de connexion tant que l'utilisateur n'applique pas aux organes d'entraînement 253 une sollicitation manuelle surmontant la résistance élastique des organes élastiques précités en vue d'entraîner les éléments mâles 252 de leur position de connexion à leur position de déconnexion.

Davantage de détails relatifs à la forme de réalisation du mécanisme de connexion 250 décrite juste ci-dessus sont donnés dans WO 2018/050303 auquel le lecteur peut se référer.

En pratique, la pièce d'appui 251 supporte et guide en déplacement les organes élastiques précités, les organes d'entraînement 253 et les éléments mâles 252 : plus généralement, quelle que soit la forme de réalisation du mécanisme de connexion 250, la pièce d'appui 251 est avantageusement prévue pour supporter et guider en déplacement le reste de ce mécanisme de connexion, notamment pour des raisons de fiabilité et de performance. Cette pièce d'appui 251 peut également être prévue pour coopérer par complémentarité de formes avec des aménagements ad hoc de la partie basse 112 du châssis 110 afin de faciliter le positionnement relatif entre les châssis 110 et 210 lors de leur mise en connexion par le mécanisme de connexion 250, en particulier le positionnement des logements femelles 115 vis-à-vis des éléments mâles 252 en position de déconnexion juste avant que ces éléments mâles ne soient déplacés jusqu'à leur position de connexion.

L'accessoire 200 comporte également un mécanisme de commande 270 qui permet de commander un blocage en roulement de la poussette double 1. Comme bien visible sur les figures 3 à 8, le mécanisme de commande 270 est porté par la partie avant 211 du châssis 210 et est prévu, lorsque l'accessoire 200 est connecté à la poussette 100 par le mécanisme de connexion 250, pour coopérer mécaniquement avec le système de blocage en roulement 160 de la poussette 100 de manière à commander ce système de blocage en roulement 160. Afin d'actionner le mécanisme de commande 270, l'accessoire 200 comporte également un organe d'actionnement 280 qui, comme bien visible sur les figures 2 et 3, est porté par la partie arrière 212 du châssis 210 de manière à pouvoir être activé par un utilisateur se tenant derrière la poussette double 1. La forme de réalisation de l'organe d'actionnement 280 n'est pas limitative du moment que cet organe d'actionnement puisse être activé par l'utilisateur, par exemple au pied ou à la main : dans l'exemple de réalisation considéré ici, l'organe d'actionnement 280 comporte, voire consiste en une pédale 281 qui, comme bien visible sur la figure 2, est montée de manière mobile, par exemple montée à basculement, sur une traverse 213 de la partie arrière 212 du châssis 210, s'étendant entre les roues 230G et 230D. Dans tous les cas, l'organe d'actionnement 280 est relié au mécanisme de commande 270 de manière à actionner ce dernier.

En pratique, pour transmette de manière fiable et pérenne l'activation de l'organe d'actionnement 280 au mécanisme de commande 270, l'accessoire 200 comporte un système de transmission mécanique 290, qui relie mécaniquement l'organe d'actionnement 280 et le mécanisme de commande 270 de manière à pouvoir actionner le mécanisme de commande 270 lorsque l'utilisateur agit sur l'organe d'actionnement 280. Ce système de transmission 290 est porté par le châssis 210 en s'étendant entre la partie avant 211 et la partie arrière 212 du châssis 210.

Suivant une forme de réalisation particulièrement pratique et efficace, qui est mise en oeuvre dans l'exemple considéré sur les figures, le mécanisme de commande 270 comporte principalement deux ensembles mobiles l'un par rapport à l'autre, à savoir un support 271 et un organe d'accouplement 272.

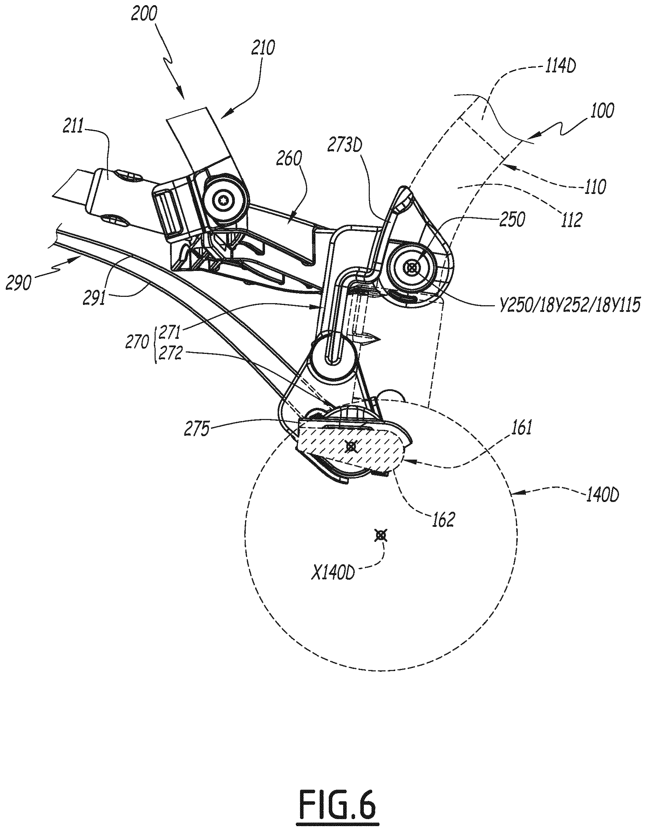

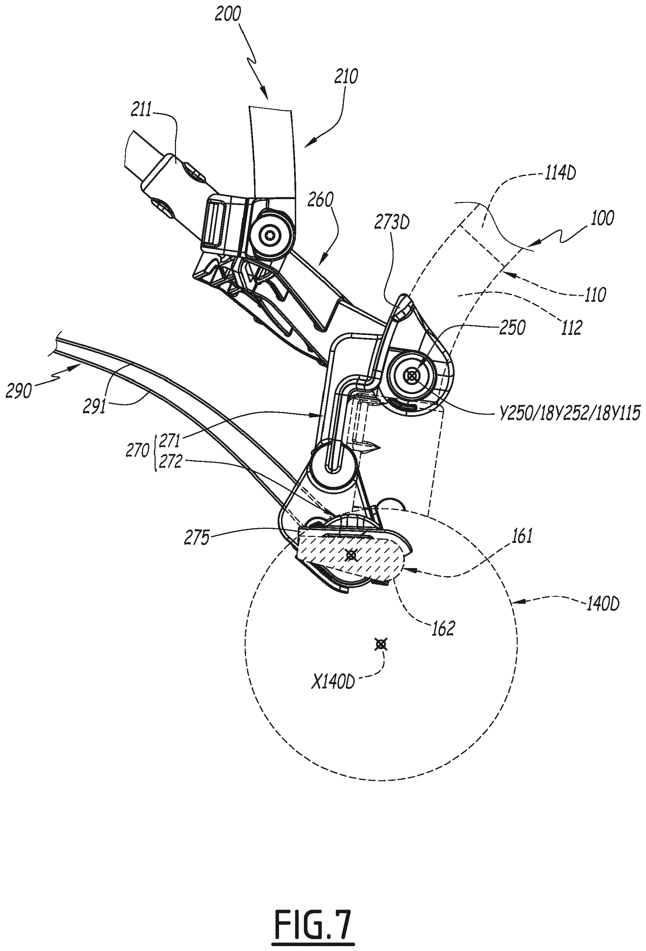

Le support 271 est relié à la partie avant 211 du châssis 210 de manière librement basculante autour de l'axe de basculement Y250. En particulier, le support 271 est avantageusement porté par le mécanisme de connexion 250, en étant monté à basculement autour de l'axe de basculement Y250 sur la pièce d'appui 251, comme bien visible sur les figures 3 à 5. Ainsi, lorsque l'accessoire 200 est déconnecté de la poussette 100, le support 271 est librement basculable par rapport au châssis 210 autour de l'axe de basculement Y250, la course de ce libre basculement pouvant être limitée par des butées mécaniques ad hoc. Lorsque l'accessoire 200 est connecté à la poussette 100 par le mécanisme de connexion 250, le support 271 est conçu pour se retrouver lié en rotation à la partie arrière 112 du châssis 110 autour de l'axe de basculement Y250, grâce à une conformation de ce support 271 telle que ce support 271 enveloppe partiellement la partie arrière 112 du châssis 110, comme montré sur la figure 2 et comme illustré schématiquement sur les figures 6 à 8. On comprend que, lorsque l'accessoire 200 est connecté à la poussette 100 par le mécanisme de connexion 250, les châssis 110 et 210 sont librement basculables l'un par rapport à l'autre autour de l'axe de basculement Y250, comme expliqué plus haut, tandis que le support 271, maintenu en contact d'enveloppement avec la partie arrière 112 du châssis 110, suit en déplacement le châssis 110 par rapport au châssis 210, comme bien visible par comparaison entre les figures 6 et 7.

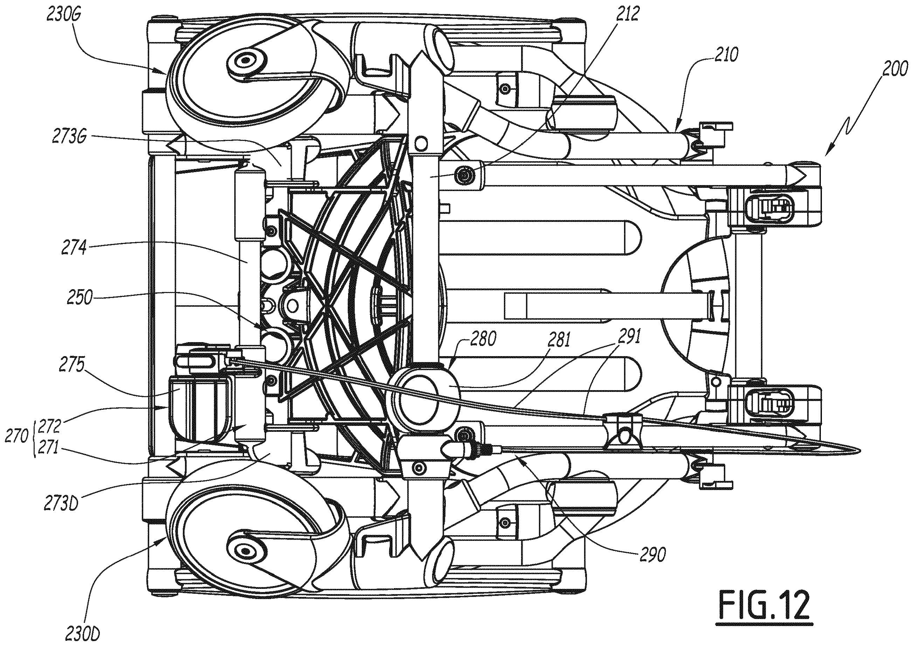

Notamment pour des raisons de stabilité mécanique, le support 271 peut, comme dans l'exemple considéré sur les figures, comporter une branche gauche 273G et une branche droite 273D, ainsi qu'une barre 274 qui est plus particulièrement visible à la figure 12 et qui relie fixement l'une à l'autre les branches gauche 273G et droite 273D, notamment en s'étendant parallèlement à l'axe de basculement Y250. Les branches gauche 273G et droite 273D sont prévues pour s'appuyer respectivement contre le montant gauche 114G et le montant droit 114D de la partie arrière 112 du châssis 110 lorsque l'accessoire 200 est connecté à la poussette 100 par un mécanisme de connexion 250 : comme bien visible sur les figures 2 et 6 à 8, chacune de ces branches 273G et 273D est conformée de manière à partiellement envelopper le montant correspondant 114G, 114D de la partie arrière 112 du châssis 110, de manière à être liée en rotation à cette partie arrière 112 du châssis 10 autour de l'axe de basculement Y250.

L'organe d'accouplement 272 est, quant à lui, porté de manière mobile par le support 271, tout en étant relié à l'organe d'actionnement 280, notamment par le système de transmission mécanique 290, de manière que l'organe d'actionnement 280 puisse entraîner en déplacement cet organe d'accouplement 272. Suivant une forme de réalisation pratique, économique et fiable, le système de transmission mécanique 290 comporte, voire consiste en des câbles 291 reliant directement l'un à l'autre l'organe d'actionnement 280 et l'organe d'accouplement 272 de manière que l'organe d'actionnement 280 entraîne l'organe d'accouplement 272 en déplacement par rapport au support 271 par tension/relâchement des câbles 291. Ces câbles 291 sont partiellement visibles sur les figures 1 à 8.

De plus, l'organe d'accouplement 272 est adapté, notamment par sa forme, pour se lier en déplacement, notamment par complémentarité de formes, avec la pièce d'actionnement 161 du système de blocage en roulement 160 de la poussette 100 : dans l'exemple de réalisation considéré sur les figures, l'organe d'accouplement 272 comporte ainsi, voire est constitué d'une chape 275 qui, lorsque l'accessoire 200 est connecté à la poussette 100, coiffe la pédale 162 de la pièce d'actionnement 161 et se lie en déplacement à cette dernière par complémentarité de formes entre elles. Grâce à la complémentarité de formes entre l'organe d'accouplement 272 et la pièce d'actionnement 161, l'organe d'accouplement 272 se retrouve lié en déplacement à la pièce d'actionnement 161 dès la mise en connexion de l'accessoire 200 avec la poussette 100 par le mécanisme de connexion 250, notamment sans avoir besoin de rajouter un moyen de fixation additionnel entre eux. Dans tous les cas, en se liant en déplacement à la pièce d'actionnement 161, l'organe d'accouplement 272 met en prise le système de blocage en roulement 160 de la poussette 100 lorsque l'accessoire 200 est connecté à cette dernière, de manière à commander ce système de blocage en roulement 160.

En pratique, on comprend que le degré de mobilité entre l'organe d'accouplement 272 et le support 271 est tributaire de la forme de réalisation du système de blocage en roulement 160. Ainsi, dans l'exemple de réalisation considéré sur les figures, l'actionnement réversible du mécanisme de blocage 163 du système de blocage en roulement 160 est opéré par basculement de la pièce d'actionnement 161, en particulier de la pédale 162, autour d'un axe parallèle à l'axe de basculement Y250 : l'organe d'accouplement 272, en particulier la chape 275, peut donc être prévu basculant par rapport au support 271 autour d'un axe de basculement qui est lui aussi parallèle à l'axe de basculement Y250 et qui se retrouve aligné avec l'axe de basculement de la pièce d'actionnement 161 lorsque l'accessoire 200 est connecté à la poussette 100 par le mécanisme de connexion 250. Plus généralement, le mécanisme de commande 270, en particulier son organe d'accouplement 272, est conçu pour coopérer mécaniquement, notamment pour mettre en prise, une partie appropriée, telle que la pièce d'actionnement 161, du système de blocage en roulement 160 de la poussette 100 lorsque cette dernière est connectée à l'accessoire 200.

En tenant compte de la description donnée jusqu'ici pour la poussette double 1, on comprend que, en dehors des aménagements de la poussette 100 qui permettent la connexion entre cette dernière et l'accessoire 200, la poussette 100 peut typiquement relever de ce qui est connu pour les poussettes solo existantes, c'est-à-dire les poussettes à une seule place permanente. En particulier, bien que la poussette 100 occupe la région avant de la poussette double 1, cette poussette 100 conserve, en service, des aménagements propres permettant, d'une part, la sollicitation manuelle directe de son châssis 110 par la partie arrière 112 de ce dernier, au niveau de l'organe de poussée 150, et, d'autre part, la commande indirecte de son système de blocage en roulement 160, par l'intermédiaire du mécanisme de commande 270 actionnable en activant l'organe d'actionnement 280. De son côté, l'accessoire 200, qui occupe la région arrière de la poussette double 1, présente, comparativement à une poussette solo existante, des singularités, à savoir que, d'une part, à l'arrière de son châssis 210, ses roues 230G et 230D ne sont pas fixes mais pivotantes et, d'autre part, à l'avant de son châssis 210, aucune roue ou organe de roulement au sol similaire n'est prévu, au profit du mécanisme de connexion 250 et du mécanisme de commande 270. Ceci étant, en dehors de ces spécificités, l'accessoire 200 présente des similitudes, au moins apparentes voire esthétiques, avec une poussette solo, notamment en ce qui concerne son châssis 210, son organe de réception 220 et son organe de poussée 240, ce qui rend intuitive la prise en main et l'utilisation de l'accessoire 200 par l'utilisateur. On comprend également que lorsque la poussette 100 et l'accessoire 200 sont déconnectés l'un de l'autre, la poussette 100 reste utilisable de manière indépendante de l'accessoire 200, en tant que poussette solo, tandis que l'accessoire 200 n'est plus, à lui seul, fonctionnellement utilisable pour transporter un enfant.

En service, c'est-à-dire lors de l'utilisation de la poussette double 1, la sécurité et la maniabilité de cette poussette double 1 sont remarquables, notamment lorsque la poussette double 1 doit être immobilisée, ainsi que lors d'un changement de direction ou lors du franchissement d'un obstacle tel qu'un trottoir, comme détaillé ci-après.

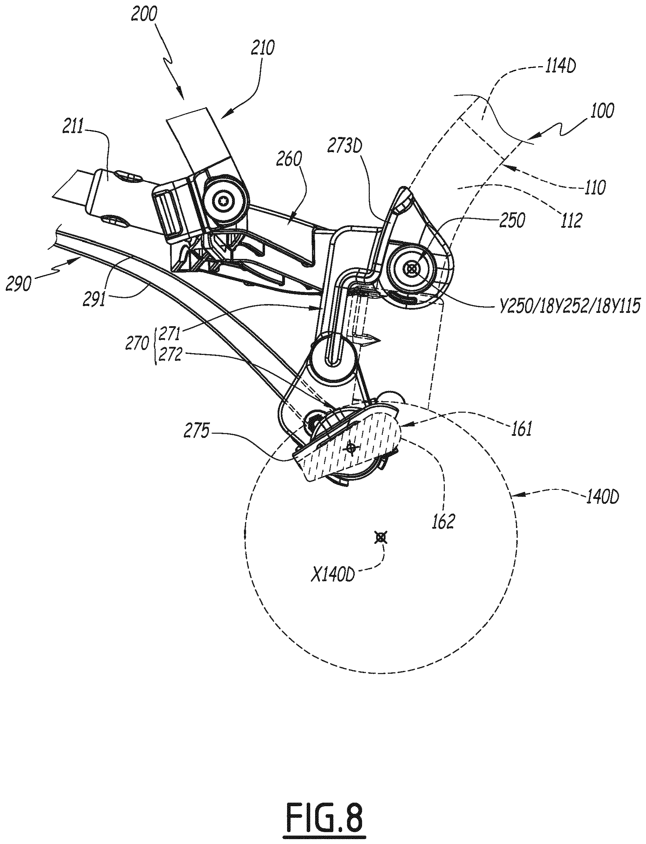

Ainsi, lorsque la poussette double 1 est en service et que l'utilisateur se tenant derrière elle souhaite l'immobiliser, l'utilisateur active l'organe d'actionnement 280, par exemple en agissant avec le pied sur la pédale 281. Cette activation, par exemple le déplacement de la pédale 281, est transmise par le système de transmission mécanique 290, en particulier par les câbles 291, au mécanisme de commande 270, en particulier à son organe d'accouplement 272 qui passe ainsi par exemple de sa position de la figure 6 à sa position de la figure 8. L'organe d'accouplement 272 active alors la pièce d'actionnement 161 pour actionner le système de blocage en roulement 160. Plus généralement, le mécanisme de commande 270 commande alors le système de blocage en roulement 160, de sorte que ce dernier bloque le roulement des roues arrière 140G et 140D de la poussette 100 et, par-là, bloque en roulement la double poussette 1. Par réversibilité du système de blocage en roulement 160 et du mécanisme de commande 270, l'utilisateur peut ensuite activer l'organe d'actionnement 280 de manière à libérer les roues arrière 140G et 140D, et par-là, libérer le roulement de la poussette double 1. Ainsi, l'immobilisation et la libération de la poussette double 1 sont opérées par l'utilisateur alors que celui-ci se tient derrière la poussette double 1, ce qui est intuitif et sécure. Comme ce sont les roues « intermédiaires » de la poussette double 1 qui sont bloquées par interférence avec le système de blocage 160, à savoir les roues arrière 140G et 140D de la poussette 100, le blocage en roulement de la poussette double 1 est particulièrement efficace quel que soit le cas de chargement de la poussette double, c'est-à-dire quelle que soit la présence effective et le poids respectif des deux enfants respectivement installés dans l'accessoire 200 et dans la poussette 100, car le poids transporté par la poussette double est toujours majoritairement supporté par ces roues « intermédiaires ». En effet, quel que soit le cas de charge, une partie substantielle de la charge résultant de l'enfant transporté dans la poussette 100 est transmise aux roues 140G et 140D directement par la partie arrière 112 du châssis 110 et, dans le même temps, une partie substantielle de la charge résultant de l'enfant transporté dans l'accessoire 200 est transmise à cette partie arrière 112 du châssis 110 par, successivement, la partie avant 211 du châssis 210 et le mécanisme de connexion 250.

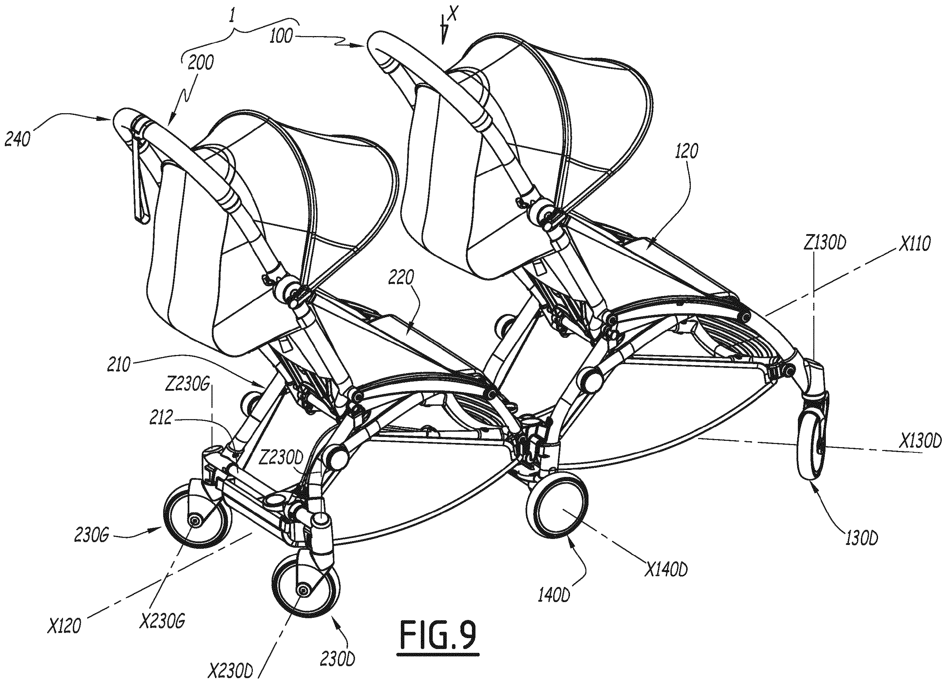

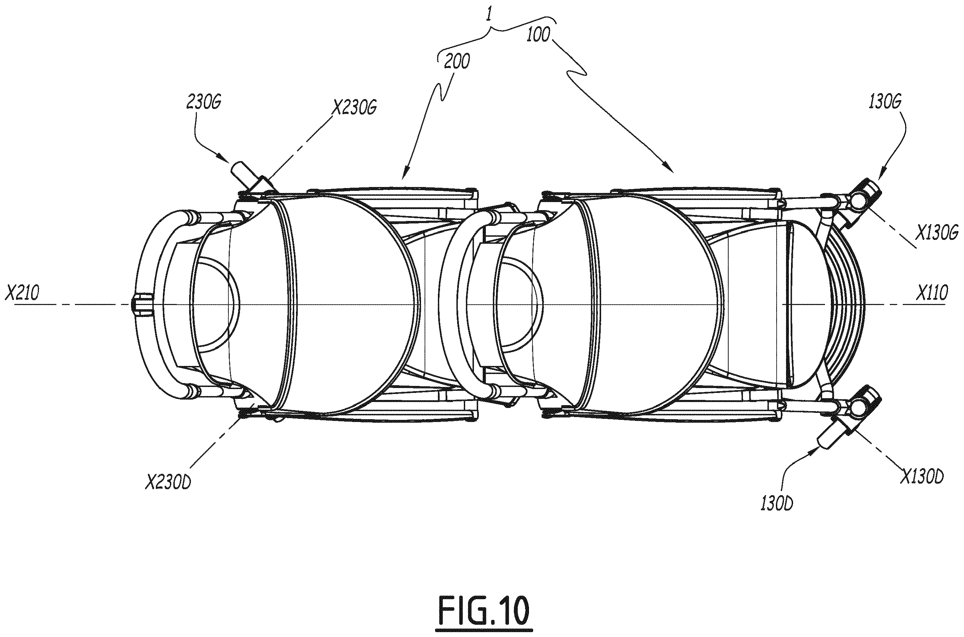

Pour ce qui concerne la maniabilité de la poussette double 1 lors d'un changement de direction d'avancée, on peut utilement se référer aux figures 9 et 10. En effet, comparativement aux figures 1 et 2 sur lesquelles la poussette double 1 progresse en une ligne droite vers l'avant lorsqu'un utilisateur, se tenant derrière l'accessoire 200, pousse la poussette double 1 vers l'avant en sollicitant de manière correspondante l'organe de poussée 240, les figures 9 et 10 montrent le comportement de la poussette double 1 lorsque le même utilisateur, se tenant toujours à l'arrière de l'accessoire 200, impulse à la poussette double 1 un virage vers la gauche en sollicitant manuellement l'organe de poussée 240. Comme bien visible sur les figures 9 et 10, l'impulsion ainsi donnée par l'utilisateur fait pivoter les roues avant 130G et 130D vers la gauche autour de leur axe de pivotement Z130G et Z130D tandis que, dans le même temps, les roues 230G et 230D de l'accessoire 200 pivotent vers la droite autour de leur axe de pivotement Z230G et Z230D. Les orientations opposées, prises respectivement par les roues avant 130G et 130D et les roues 230G et 230D, résultent d'un effet différentiel, produit par les roues arrière 140G et 140D qui sont fixes. En d'autres termes, vis-à-vis des roues avant de la poussette 100 et des roues de l'accessoire 200, les roues « intermédiaires » de la poussette double 100, c'est-à-dire les roues arrière 140G et 140D de la poussette 100, forment, en quelque sorte, un train différentiel fixe à effet pivot dans un plan horizontal, permettant à l'utilisateur de piloter, lors des changements de direction, la poussette double 1 de manière quasi identique au pilotage d'une poussette solo à roue(s) avant pivotante(s) et à roues arrière fixes. Cet effet de différentiel au niveau des roues « intermédiaires » précitées, c'est-à-dire les roues 140G et 140D, est d'autant plus intéressant que ce sont ces roues « intermédiaires » qui supportent majoritairement le poids des deux enfants transportés par la poussette double 1, comme expliqué un peu plus haut.

La maniabilité de la double poussette 1 lors du changement de direction est avantageusement renforcée en prévoyant que la voie V230, entre les roues 230G et 230D de l'accessoire 200, est plus grande que la voie V140 entre les roues arrière 140G et 140D de la poussette 100. Le braquage des roues 230G et 230D de l'accessoire 200 est notamment facilité.

Pour ce qui concerne la maniabilité de la poussette double 1 lors du franchissement d'un obstacle s'étendant transversalement à sa direction antéropostérieure, tel qu'un trottoir, le mécanisme de connexion 250 permet à la poussette double 1 de se comporter longitudinalement à la manière d'une chenille. En effet, si on détaille l'exemple d'utilisation de la poussette double 1 pour monter sur un trottoir, l'utilisateur procède d'abord en approchant la poussette 100 à proximité immédiate, voire en butée contre le trottoir, en orientant naturellement l'axe antéropostérieur X110 transversalement voire perpendiculairement au trottoir. Sans lâcher par l'une de ses mains l'organe de poussée 240, l'utilisateur sollicite manuellement l'organe de poussée 150 par son autre main, si besoin en se plaçant latéralement à l'accessoire 200, indifféremment à gauche ou à droite de ce dernier : en manipulant l'organe de poussée 150 de manière à basculer légèrement vers l'arrière et vers le bas la partie arrière 112 du châssis 110, la partie avant 111 de ce châssis bascule, de manière correspondante, vers l'arrière et vers le haut, ce qui fait décoller les roues avant 130G et 130D du sol, tandis que, dans le même temps, les roues arrière 140G et 140D de la poussette 100 et les roues 230G et 230D de l'accessoire 200 restent au contact du sol puisque le châssis 110 peut librement basculer par rapport au châssis 210 autour de l'axe de basculement Y250 au niveau du mécanisme de connexion 250. L'utilisateur peut alors, avec l'une et/ou l'autre de ses mains, faire légèrement avancer la poussette double 1 vers l'avant, jusqu'à ce que les roues avant 130G et 130D soient à l'aplomb du trottoir. Toujours sans lâcher l'organe de poussée 240 par l'une de ses mains, l'utilisateur peut relâcher l'organe de poussée 150, pour ramener les roues avant 130G et 130D au contact du sol, au niveau haut du trottoir. L'utilisateur, le cas échéant replacé totalement à l'arrière de l'accessoire 200, peut ensuite faire avancer la poussette double 1 vers l'avant, jusqu'à ce que les roues arrière 140G et 140D de la poussette 100 arrivent à proximité voire en butée contre le trottoir : en agissant cette fois-ci sur l'organe de poussée 240, l'utilisateur bascule la partie arrière 212 du châssis 210 vers le bas et vers l'arrière, de manière à soulever légèrement la partie avant 211 du châssis 210. Par transmission de mouvement au travers du mécanisme de connexion 250, la partie arrière 112 du châssis 110 est soulevée de manière correspondante permettant aux roues arrière 140G et 140D de la poussette 100 de franchir le trottoir. Enfin, après avoir encore légèrement avancé la poussette double 1 jusqu'à amener les roues 230G et 230D de l'accessoire 200 à proximité du trottoir, voire au contact de ce dernier, l'utilisateur le fait franchir à ces roues, si besoin en soulevant légèrement l'organe de poussée 240, le châssis 210 basculant ainsi librement autour de l'axe de basculement Y250 par rapport au châssis 110 qui repose, par ses roues 130G, 130D, 140G et 140D, sur le niveau haut du trottoir.

Plus globalement, on comprend que la libre articulation en basculement entre les châssis 110 et 210 permet à la double poussette 1 de rouler confortablement sur un sol irrégulier, ainsi que de franchir aisément tout obstacle transversal, aussi bien en montée qu'en descente, dans la mesure où, selon la hauteur et le sens de franchissement des obstacles, l'utilisateur peut agir sur l'un et/ou sur l'autre des organes de poussée 150 et 240, tout en gardant toujours l'une de ses mains sur l'organe de poussée 240 pour garantir une parfaite sécurité. Dans le même temps, la libre articulation entre les châssis 110 et 210 est, en quelque sorte, accommodée par le mécanisme de commande 270, en particulier par son support 271 lié en rotation à la partie arrière 112 du châssis 110 autour de l'axe de basculement Y250, le mécanisme de commande 270 restant ainsi opérationnel quelle que soit la position basculée effective entre le châssis 110 et le châssis 210.

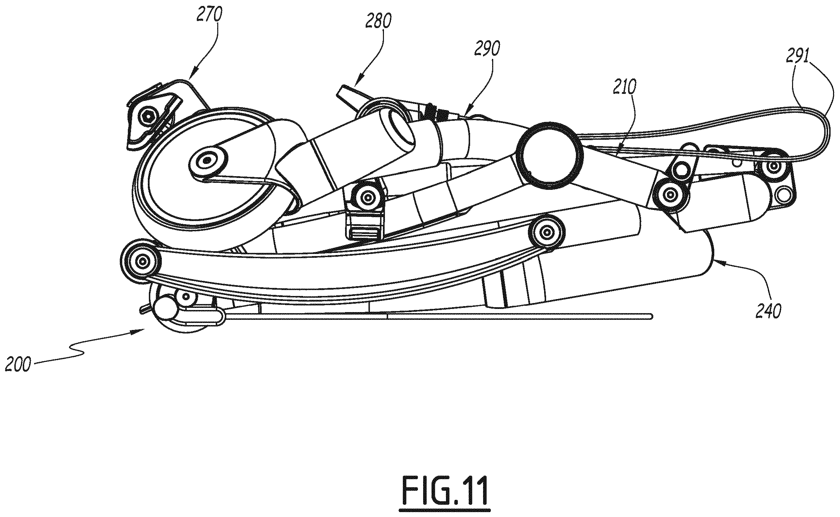

Enfin, les figures 11 à 13 montrent l'accessoire 200, déconnecté de la poussette 100 et passé, par pliage, dans une configuration de stockage depuis sa configuration de service illustrée aux figures précédentes. Ainsi, selon cet aspect optionnel avantageux, le châssis 210 de l'accessoire 200 est, dès lors qu'il est déconnecté du châssis 110 de la poussette 100, pliable entre la configuration de service des figures 1 à 10, dans laquelle l'accessoire 200 peut être connecté à la poussette 100 par le mécanisme de connexion 250 comme expliqué plus haut, et la configuration de stockage des figures 11 à 13, qui est plus compacte que la configuration de service. Une fois que le châssis 210 est dans cette configuration de stockage, l'accessoire 200 est aisément transportable par l'utilisateur de la poussette 100 : en effet, l'accessoire 200 plié sur lui-même peut être porté à la main ou à l'épaule, à l'aide d'une sangle, par l'utilisateur de la poussette 100, marchant derrière cette dernière et poussant celle-ci. En variante, l'accessoire 200 replié sur lui-même peut être directement accroché à la poussette 100, à l'aide d'un dispositif ad hoc.

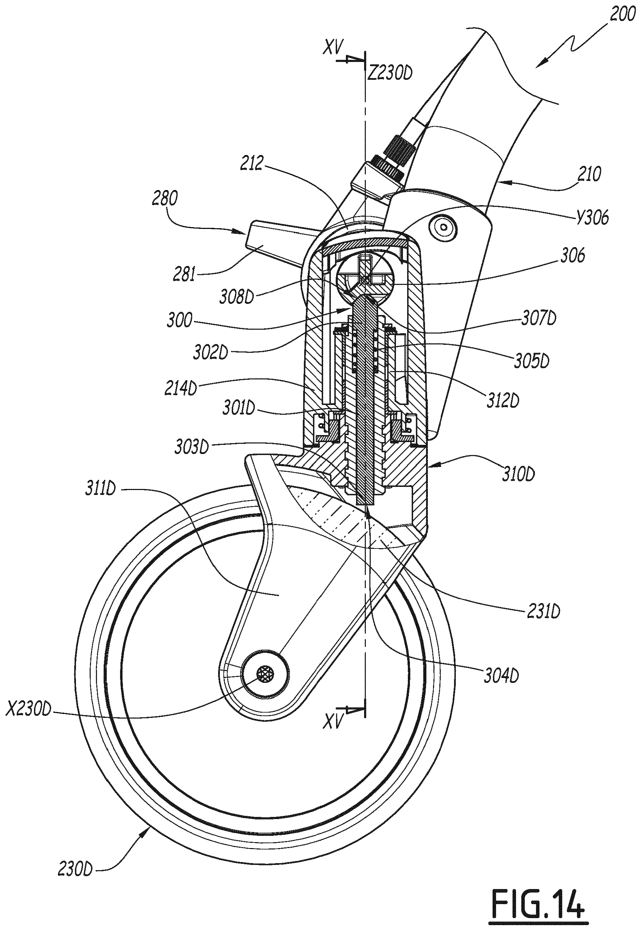

Suivant un aménagement optionnel avantageux, qui est plus spécifiquement illustré par les figures 14 à 18, l'accessoire 200 comporte également un mécanisme de blocage 300 qui permet de bloquer les roues 230G et 230D de l'accessoire.

Comme illustré par les figures 14 à 18, ce mécanisme de blocage 300 est agencé dans la partie arrière 212 du châssis 210, en étant porté de manière mobile par cette partie arrière 212 du châssis 210. Le mécanisme de blocage 300 est conçu pour, de manière réversible, interférer avec au moins l'une des roues 230G et 230D, voire avantageusement avec ces deux roues 230G et 230D, de manière à bloquer le roulement de ces roues, c'est-à-dire à bloquer la rotation de ces dernières autour de leur axe de rotation X230G, X230D, et ce quelle que soit l'orientation de ces roues autour de leur axe de pivotement Z230G, Z230D. A cet effet, le mécanisme de blocage 300 comporte des éléments associés à chacune des roues 230G et 230D : ci-après, une forme de réalisation des seuls aménagements associés à la roue droite 230D va être détaillée, étant entendu que ces aménagements sont transposables, de manière symétrique, à la roue gauche 230G.

Ainsi, dans la forme de réalisation illustrée sur les figures 14 à 18, le mécanisme de blocage 300 comporte, pour la roue droite 230D, un élément bloqueur 301 qui est prévu mobile par rapport au châssis 210 de manière à pouvoir interférer, de manière réversible, avec la roue 230D de manière à en bloquer le roulement. Plus précisément, l'élément bloqueur 301D est à la fois centré sur l'axe de pivotement Z230D et déplaçable suivant cet axe de pivotement Z230D. A cet effet, suivant une forme de réalisation pratique, l'élément bloqueur 301D présente une forme allongée suivant l'axe de pivotement Z230D, en formant par exemple une tige ou une pièce allongée similaire. Dans tous les cas, l'élément bloqueur 301D comporte deux extrémités opposées l'une à l'autre suivant l'axe de pivotement Z230D, à savoir une extrémité 302D, tournée vers la roue 230D, et une extrémité 303D.

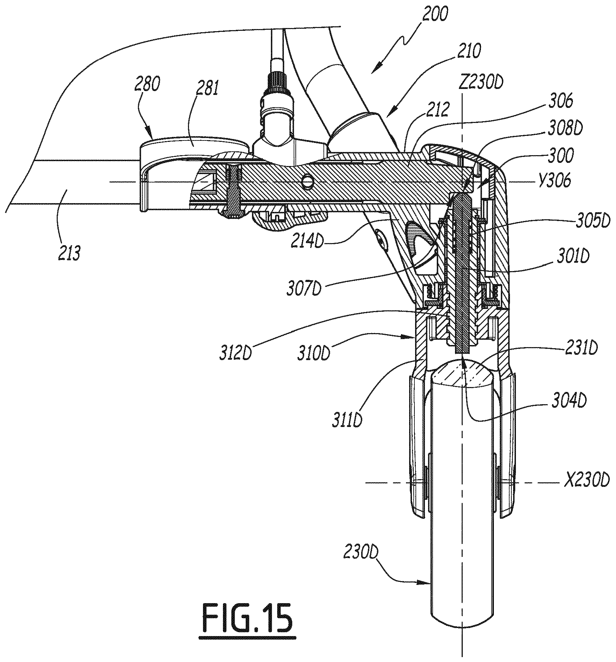

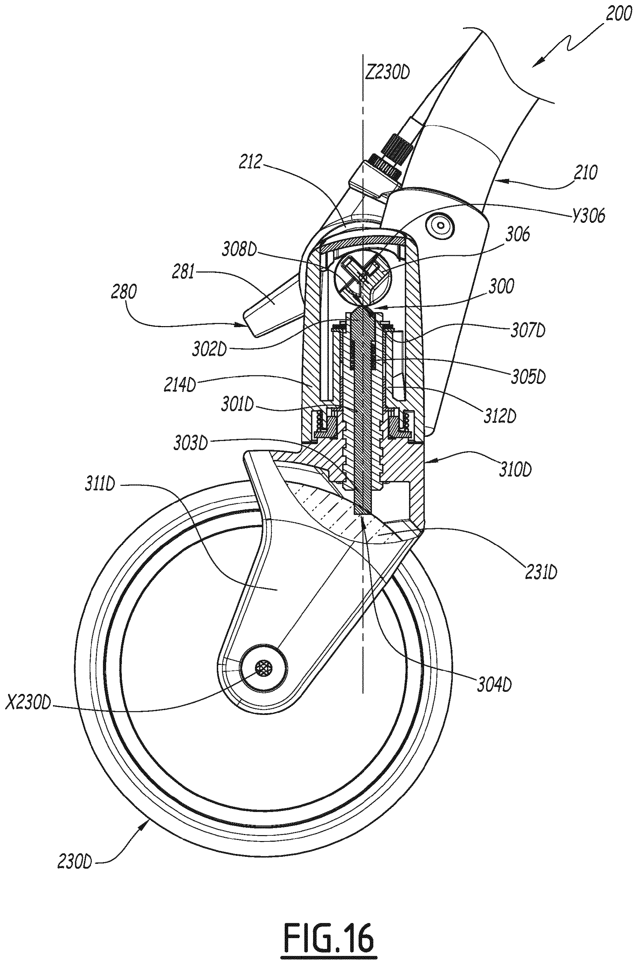

Le déplacement de l'élément bloqueur 301D suivant l'axe de pivotement Z230D est prévu entre une position désengagée, illustrée sur les figures 14 et 15, et une position engagée, illustrée sur les figures 16 à 18. Dans la position désengagée, l'élément bloqueur 301D est écarté de la roue 230D de manière à laisser cette roue libre de rouler. Dans la position engagée, l'élément bloqueur 301D, plus précisément son extrémité 302D, interfère avec une bande de roulement 231D de la roue 230D de manière à bloquer en roulement cette roue 230D. En pratique, la bande de roulement 231D de la roue 230D présente une certaine souplesse, notamment comparativement au moyeu de cette roue, permettant à l'extrémité 302D de l'élément bloqueur 301D d'écraser localement la bande de roulement 231D en s'enfonçant dans cette dernière, moyennant la déformation souple de cette bande de roulement. Les spécificités relatives aux matériaux respectifs de l'élément bloqueur 301D et de la bande de roulement 231D ne sont pas limitatives de l'invention, du moment que leur interférence, lorsque l'élément bloqueur 301D est dans la position engagée, assure un blocage en roulement efficace de la roue 230D. Suivant une forme de réalisation qui renforce les effets bloquant de cette interférence, l'extrémité 302D de l'élément bloqueur 301D est pourvue d'une surface d'appui 304D qui, lorsque l'élément bloqueur 301D est dans la position engagée, est appuyée suivant l'axe de pivotement Z230D contre la bande de roulement 231D, en s'y enfonçant localement, comme bien visible sur les figures 16 à 18.

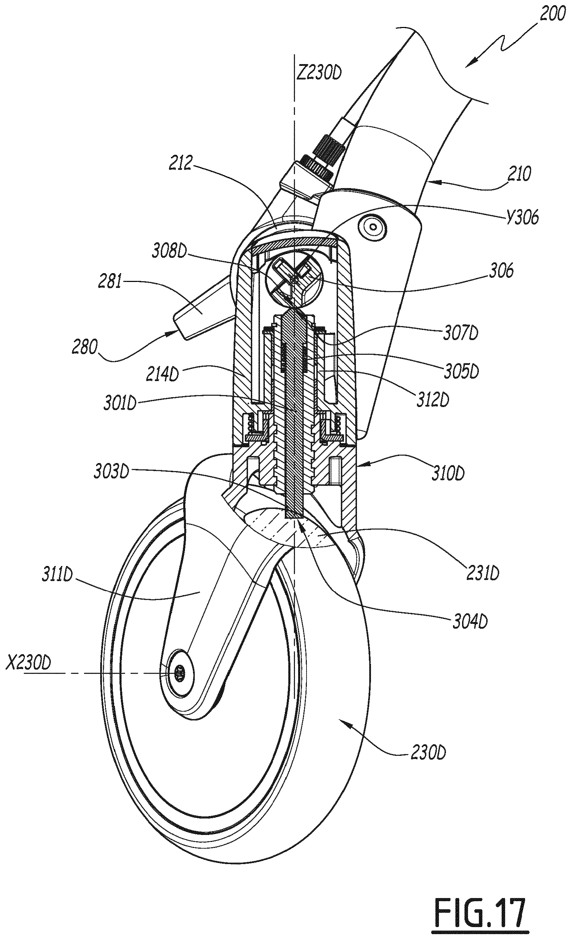

Dans tous les cas, du fait que le déplacement de l'élément bloqueur 301D soit centré sur l'axe de pivotement Z230D, le blocage en roulement de la roue 230D par l'élément bloqueur 301D en position engagée est effectif quelle que soit la position angulaire de la roue 230D autour de son axe de pivotement Z230D, comme bien visible par comparaison des figures 16 et 17. Autrement dit, quelle que soit l'orientation de la roue 230D autour de l'axe de pivotement Z230D, l'élément bloqueur 301D en position engagée bloque cette roue 230D en rotation autour de son axe de rotation X230D, par interférence locale avec la bande de roulement 231D de cette roue.

Les aménagements de l'accessoire 200 permettant à l'élément bloqueur 301D d'être à la fois mobile et centré sur l'axe de pivotement Z230D ne sont pas limitatifs de l'invention. Suivant une forme de réalisation pratique et fiable, qui est mise en oeuvre dans l'exemple de réalisation considéré sur les figures, ces aménagements impliquent un support 310D associé à la roue 230D. Ce support 310D relie, de manière mobile, la roue 230D au châssis 210, plus précisément à une portion gauche de la partie arrière 212 de ce châssis, en particulier à un carter d'assemblage 214D qui assure un assemblage fixe de l'extrémité droite de la traverse 213 avec le reste de la partie arrière 212 du châssis 210. Dans l'exemple de réalisation considéré ici, et comme bien visible sur les figures 14 à 18, le support 310D comporte une fourche 311D, à la base de laquelle la roue 230D est montée rotative autour de l'axe de rotation X230D, une portion haute de cette roue 230D étant agencée entre les branches de la fourche 311D. Le support 310D comporte également un insert tubulaire 312D, qui est solidaire de la fourche 311D, en s'étendant vers le haut depuis le sommet de cette dernière, et qui est sensiblement centré sur l'axe de pivotement Z230D. Cet insert tubulaire 312D est monté de manière librement pivotante autour de l'axe de pivotement Z230D sur la portion droite de la partie arrière 212 du châssis 210, plus précisément à l'intérieur du carter d'assemblage 214D, un ou plusieurs paliers étant interposés, radialement à l'axe de pivotement Z230D, entre l'insert tubulaire 312D et le carter d'assemblage 214D. De plus, l'insert tubulaire 312D est monté de manière fixe en translation selon l'axe de pivotement Z230D par rapport au châssis 210, notamment à l'intérieur du carter d'assemblage 214D, par exemple au moyen d'un circlip interposé entre eux. Plus généralement, la structure du support 310D, détaillée ci-dessus, n'est pas limitative du moment que le support 310D est monté sur la partie arrière 212 du châssis 210 de manière pivotante autour de l'axe de pivotement Z230D et que la roue 230D est montée de manière rotative autour de son axe de rotation X230D sur ce support 310D. De plus, on rappelle que ce qui vient d'être décrit pour la roue droite 230D est transposable à la roue gauche 330G : la roue gauche 230G peut ainsi être associée à un support 310G, visible notamment sur la figure 2, similaire au support 310D. Dans tous les cas, comme bien visible sur les figures 14 à 18, l'élément bloqueur 301D est avantageusement guidé en translation suivant l'axe Z230D par le support 310D. A cet effet, dans l'exemple de réalisation considéré ici, l'élément bloqueur 301D est reçu de manière ajustée et librement coulissante à l'intérieur de l'insert tubulaire 312D du support 310D.

Afin de commander en déplacement l'élément bloqueur 301D entre les positions désengagée et engagée, le mécanisme de blocage 300 comporte un ressort 305D et un actionneur 306.

Le ressort 305D agit sur l'élément bloqueur 301D en repoussant ce dernier vers la position désengagée. Dans l'exemple de réalisation considéré sur les figures, le ressort 305D est interposé, suivant la direction de l'axe de pivotement Z230D, entre l'élément bloqueur 301D et le support 310D, en étant à la fois agencé autour de l'élément bloqueur 301D et logé à l'intérieur de l'insert tubulaire 312D.

L'actionneur 306 est, quant à lui, monté mobile sur le châssis 210 de manière à pouvoir entraîner l'élément bloqueur 301D de la position désengagée à la position engagée, en contrecarrant l'action du ressort 305D. Dans l'exemple de réalisation considéré sur les figures, l'actionneur 306 s'apparente à un arbre rotatif, en présentant une forme allongée, centrée sur un axe d'actionnement Y306, qui s'étend de manière sensiblement perpendiculaire aux axes de pivotement Z230G et Z230D et autour duquel l'actionneur 306 est mobile en rotation. A son extrémité tournée vers l'axe de pivotement Z230D, l'actionneur 306 est pourvu d'une surface de rampe 307D conçue pour coopérer par contact avec l'élément bloqueur 301D, plus précisément avec l'extrémité 303D de ce dernier : comme bien visible sur les figures 14 à 18, l'extrémité 303D de l'élément bloqueur 301D est pourvue d'une surface d'appui 308D qui, sous l'action du ressort 305D, est appuyée suivant l'axe de pivotement Z230D contre la surface de rampe 307D de l'actionneur 306. Le profil de la surface de rampe 307D est conçu pour pousser l'élément bloqueur 301D suivant l'axe de pivotement Z230D vers la roue 230D lorsque l'actionneur 306 est déplacé en rotation autour de l'axe d'actionnement Y306 depuis une première position angulaire, qui est montrée sur les figures 14 et qui est associée à la position désengagée, à une seconde position, qui est montrée sur les figures 16 à 18 et qui est associée à la position engagée. Bien entendu, on comprend que les spécificités, notamment le profil, d'une surface dédiée de l'actionneur 306, telle que la surface de rampe 307D, qui coopère par contact avec l'élément bloqueur 301D aux fins de son entraînement de la position désengagée à la position engagée, ne sont pas limitatives de l'invention, mais, au contraire, sont directement dépendantes des caractéristiques de mobilité de l'actionneur 306 par rapport au châssis 210.

Dans tous les cas, l'actionneur 306 est avantageusement prévu pour entraîner conjointement l'élément bloqueur 301D associé à la roue droite 230D et l'élément bloqueur associé à la roue gauche 230G, en contrecarrant l'action des ressorts respectivement associés à ces deux éléments bloqueurs pour passer ces derniers de leur position désengagée à leur position engagée. Ainsi, dans l'exemple de réalisation considéré sur les figures, l'actionneur 306 s'étend depuis l'élément bloqueur 301D jusqu'à l'élément bloqueur associé à la roue gauche 230G.

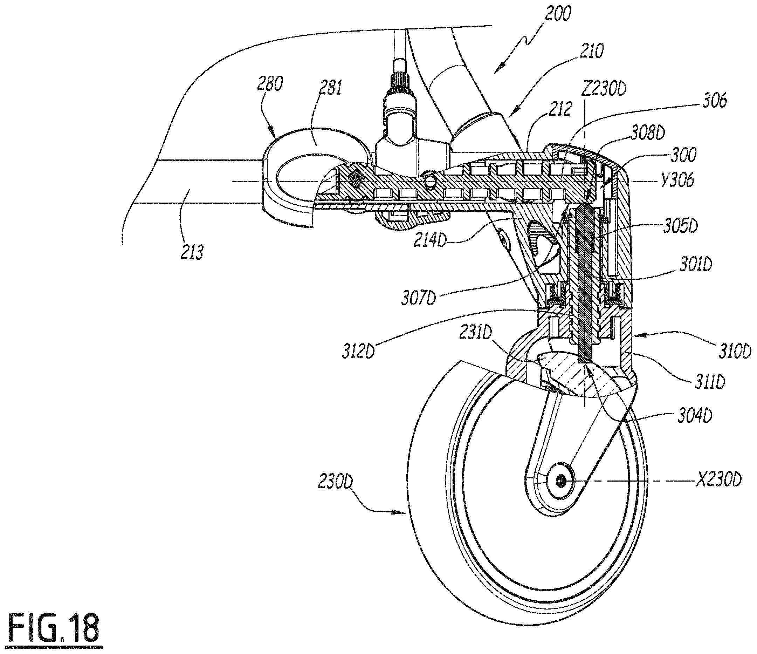

Quelle que soit la forme de réalisation de l'actionneur 306, ce dernier est lié en déplacement à l'organe d'actionnement 280 de l'accessoire 200 de manière que, lors de l'activation de l'organe d'actionnement 280 pour actionner le mécanisme de commande 270 comme expliqué plus haut, l'organe d'actionnement 280 actionne conjointement le mécanisme de blocage 300, en déplaçant l'actionneur 306 pour qu'il entraîne le ou les éléments bloqueurs de leur position désengagée à leur position engagée. Plus généralement, l'accessoire 200 est conçu de façon que l'organe d'actionnement 280 soit relié au mécanisme de blocage 300 de manière à actionner ce mécanisme de blocage conjointement à l'actionnement du mécanisme de commande 270 : on comprend que l'activation de l'organe d'actionnement 280 par un utilisateur se tenant derrière la poussette double 1 actionne simultanément, d'une part, le système de blocage en roulement 160 de la poussette 1, via le système de transmission mécanique 290 et le mécanisme de commande 270, et, d'autre part, le mécanisme de blocage 300, via la liaison entre l'organe d'actionnement 280 et l'actionneur 306. En pratique, la nature de la liaison entre l'organe d'actionnement 280 et l'actionneur 306 dépend des spécificités de ces derniers. Dans l'exemple de réalisation considéré sur les figures, la pédale 281 de l'organe d'actionnement 280, décrite plus haut, est avantageusement solidarisée fixement à l'actionneur 306, notamment à une partie courante de cet actionneur comme bien visible sur les figures 15 et 18, en prévoyant, à la fois, que l'actionneur 306 est monté et guidé en rotation autour de l'axe d'actionnement Y306 à l'intérieur de la traverse 213 de la partie arrière 212 du châssis 10 et que la pédale 281 est montée à basculement autour de cet axe d'actionnement Y306 sur la traverse 213.

Ainsi, lorsque la poussette double 1 est en service et que l'utilisateur se tenant derrière elle souhaite l'immobiliser, l'utilisateur active l'organe d'actionnement 280, par exemple en agissant avec le pied sur la pédale 281. Cette activation conduit conjointement, d'une part, au blocage en roulement des roues arrière 140G et 140D de la poussette 100 par le système de blocage en roulement 160 commandé par le mécanisme de commande 270, et, d'autre part, le blocage des roues 230G et 230D de l'accessoire 200 par le mécanisme de blocage 300. Par réversibilité, d'une part, du système de blocage en roulement 160 et du mécanisme de commande 270 et, d'autre part, du mécanisme de blocage 300, l'utilisateur peut ensuite activer l'organe d'actionnement 280 de manière à libérer conjointement les roues arrière 140G et 140D de la poussette 1 et les roues 230G et 230D de l'accessoire 200 et, par-là, libérer le roulement de la poussette double 1. Le blocage en roulement de la poussette double 1, assuré essentiellement par le blocage des roues 140G et 140D comme expliqué plus haut, est ainsi avantageusement renforcé moyennant le blocage des roues 230G et 230D, ce qui améliore ainsi l'immobilisation de la poussette double 1, en particulier lorsque cette dernière se retrouve dans des situations d'utilisation exceptionnelles, telles que des pentes fortement inclinées ou très accidentées.

Par ailleurs, divers aménagements et variantes à la poussette 100 et à l'accessoire 200 décrits jusqu'ici sont envisageables :
- plutôt que d'avoir deux roues avant, la poussette 100 peut ne comporter qu'une seule roue avant, agencée sur l'axe antéropostérieur X110 ; de la même façon, davantage que deux roues avant peuvent être prévues pour la poussette 100, de même que davantage que deux roues arrière peuvent être prévues pour la poussette 100 et que davantage que deux roues peuvent être prévues pour l'accessoire 200 ; et/ou
- chacune des roues évoquées jusqu'ici peut être remplacée par une paire de roues jumelées ou de roulettes jumelées, voire un train de davantage de roues jumelées.

## Revendications

1. Accessoire (200) pour poussette, qui est connectable à une poussette (100) pour former ensemble une poussette double (1) et qui est inutilisable pour transporter un enfant lorsque l'accessoire est déconnecté de la poussette,
lequel accessoire (200) comporte :
- un châssis (210) qui, en service, supporte un organe de réception (220) dans lequel un enfant à transporter peut être installé,
- un mécanisme de connexion (250) pour connecter de manière réversible l'accessoire (200) à la poussette (100) pour former la poussette double (1), ce mécanisme de connexion étant porté par une partie avant (211) du châssis (210) de l'accessoire et étant adapté pour solidariser de façon amovible cette partie avant du châssis de l'accessoire à une partie arrière (112) d'un châssis (110) de la poussette de manière à, à la fois, agencer l'accessoire derrière la poussette selon une direction antéropostérieure et définir un axe de basculement (Y250), qui s'étend en service de manière sensiblement parallèle au sol et de manière sensiblement perpendiculaire à la direction antéropostérieure et autour duquel la partie avant du châssis de l'accessoire et la partie arrière du châssis de la poussette basculent librement l'une par rapport à l'autre,
- deux roues (230G, 230D), qui, lorsque l'accessoire (200) est connecté à la poussette (100) par le mécanisme de connexion (250), s'appuient et roulent sur le sol et qui sont reliées à une partie arrière (212) du châssis (210) de l'accessoire de manière pivotante autour d'axes de pivotement respectifs (Z230G, Z230D),
- un organe de poussée (240), qui est porté par la partie arrière (212) du châssis (210) de l'accessoire (200) et qui est adapté pour être sollicité manuellement par un utilisateur se tenant derrière la poussette double (1),
- un mécanisme de commande (270) pour commander un blocage en roulement de la poussette double (1), ce mécanisme de commande étant porté par la partie avant (211) du châssis (210) de l'accessoire (200) et étant adapté pour, lorsque l'accessoire est connecté à la poussette (100) par le mécanisme de connexion (250), coopérer mécaniquement avec un système de blocage en roulement (160), intégré à la poussette, de manière à commander ce système de blocage en roulement, et
- un organe d'actionnement (280), qui est porté par la partie arrière (212) du châssis (210) de l'accessoire (200) de manière à pouvoir être activé par un utilisateur se tenant derrière la poussette double (1), et qui est relié au mécanisme de commande (270) de manière à actionner ce mécanisme de commande.

2. Accessoire pour poussette suivant la revendication 1, dans lequel l'accessoire (200) comporte en outre un mécanisme de blocage (300) pour bloquer les roues (230G, 230D) de l'accessoire, ce mécanisme de blocage étant porté par la partie arrière (212) du châssis (210) de l'accessoire et étant adapté pour, de manière réversible, interférer avec au moins l'une ou avec chacune des deux roues de l'accessoire de manière à en bloquer le roulement quelle que soit l'orientation de la roue de l'accessoire autour de l'axe de pivotement (Z230G, Z230D) de cette roue de l'accessoire,
et dans lequel l'organe d'actionnement (280) est relié au mécanisme de blocage (300) de manière à actionner le mécanisme de blocage conjointement à l'actionnement du mécanisme de commande (270).

3. Accessoire pour poussette suivant la revendication 2, dans lequel le mécanisme de blocage (300) comporte, pour au moins l'une des deux roues (230G, 230D) de l'accessoire (200) ou pour chacune des deux roues de l'accessoire, un élément bloqueur (301D), qui est sensiblement centré sur l'axe de pivotement (Z230D) de la roue (230D) de l'accessoire et qui est déplaçable suivant l'axe de pivotement de la roue de l'accessoire par rapport au châssis (210) de l'accessoire entre :
- une position désengagée, dans laquelle l'élément bloqueur est écarté de la roue de l'accessoire de manière à laisser la roue de l'accessoire libre de rouler, et
- une position engagée, dans laquelle l'élément bloqueur interfère avec une bande de roulement (231D) de la roue de l'accessoire de manière à bloquer en roulement la roue de l'accessoire.

4. Accessoire pour poussette suivant la revendication 3, dans lequel chacune des deux roues (230G, 230D) de l'accessoire (200) est associée à un support (310G, 310D) :
- qui est monté sur la partie arrière (212) du châssis (210) de manière pivotante autour de l'axe de pivotement (Z230G, Z230D) de la roue de l'accessoire,
- sur lequel la roue de l'accessoire est montée de manière rotative sur elle-même pour rouler, et
- qui guide l'élément bloqueur correspondant (301D) en translation suivant l'axe de pivotement de la roue de l'accessoire.

5. Accessoire pour poussette suivant l'une des revendications 3 ou 4, dans lequel le mécanisme de blocage (300) comporte en outre :
- pour le ou chaque élément bloqueur (301D), un ressort (305D) qui repousse l'élément bloqueur vers la position désengagée, et
- un actionneur (306), qui est lié en déplacement à l'organe d'actionnement (280) et qui, lors de l'actionnement conjoint du mécanisme de blocage (300) et du mécanisme de commande (270) par l'organe d'actionnement (280), entraîne le ou les éléments bloqueurs de la position désengagée à la position engagée, en contrecarrant l'action du ou des ressorts.

6. Accessoire pour poussette suivant la revendication 5, dans lequel le ou chaque élément bloqueur (301D) comporte une première extrémité (302D) et une seconde extrémité (303D), qui sont opposées l'une à l'autre suivant l'axe de pivotement (Z230D) de la roue correspondante (230D) de l'accessoire (200),
dans lequel la première extrémité (302D) du ou de chaque élément bloqueur (301D) est pourvue d'une première surface d'appui (304D) qui, lorsque l'élément bloqueur est dans la position engagée, est appuyée suivant l'axe de pivotement (Z230D) de la roue correspondante (230D) de l'accessoire (200) contre la bande de roulement (231D) de la roue correspondante de l'accessoire,
et dans lequel la seconde extrémité (303D) du ou de chaque élément bloqueur (301D) est pourvue d'une seconde surface d'appui (308D) qui, sous l'action du ressort correspondant (305D), est appuyée suivant l'axe de pivotement (Z230D) de la roue correspondante (230D) de l'accessoire (200) contre une surface dédiée (307D) de l'actionneur (306).

7. Accessoire pour poussette suivant l'une des revendications 5 ou 6, dans lequel l'actionneur (306) est mobile, par rapport au châssis (210) de l'accessoire (200), en rotation autour d'un axe d'actionnement (Y306) qui s'étend de manière sensiblement perpendiculaire aux axes de pivotement respectifs (Z230G, Z230D) des roues (230G, 230D) de l'accessoire (200).

8. Accessoire pour poussette suivant la revendication 7, dans lequel la partie arrière (212) du châssis (210) de l'accessoire (200) comprend une traverse (213) :
- qui s'étend entre les deux roues (230G, 230D) de l'accessoire,
- à l'intérieur de laquelle l'actionneur (306) est monté et guidé en rotation autour de l'axe d'actionnement (Y306), et
- sur laquelle une pédale (281) de l'organe d'actionnement (280) est montée à basculement autour de l'axe d'actionnement (Y306), en étant solidarisée à l'actionneur (306).

9. Accessoire pour poussette suivant l'une quelconque des revendications précédentes, dans lequel le mécanisme de commande (270) comporte un support (271) qui est :
- relié à la partie avant (211) du châssis (210) de l'accessoire (200) de manière librement basculante autour de l'axe de basculement (Y250), et
- conformé pour, lorsque l'accessoire (200) est connecté à la poussette (100) par le mécanisme de connexion (250), partiellement envelopper la partie arrière (112) du châssis (110) de la poussette de manière à être lié en rotation à cette partie arrière du châssis de la poussette autour de l'axe de basculement,
et dans lequel le mécanisme de commande (270) comporte également un organe d'accouplement (272) qui est :
- porté de manière mobile par le support (271) du mécanisme de commande,
- relié à l'organe d'actionnement (280) de manière que l'organe d'actionnement entraîne en déplacement l'organe d'accouplement, et
- adapté pour, lorsque l'accessoire (200) est connecté à la poussette (100) par le mécanisme de connexion (250), mettre en prise le système de blocage en roulement (160) de la poussette.

10. Accessoire pour poussette suivant la revendication 9, dans lequel l'organe d'accouplement (272) est adapté pour, lorsque l'accessoire (200) est connecté à la poussette (100) par le mécanisme de connexion (250), se lier en déplacement à une pièce d'actionnement (161), notamment par complémentarité de formes, laquelle pièce d'actionnement appartient au système de blocage en roulement (160) de la poussette et est prévue pour, lorsque l'accessoire est déconnecté de la poussette, être activée directement par un utilisateur se tenant derrière la poussette.

11. Accessoire pour poussette suivant la revendication 10, dans lequel l'organe d'accouplement (272) comporte une chape (275) qui est adaptée pour se lier en déplacement à une pédale (162) de la pièce d'actionnement (161), en coiffant cette pédale.

12. Accessoire pour poussette suivant l'une quelconque des revendications 9 à 11, dans lequel le support (271) du mécanisme de commande (270) comporte une branche gauche (273G) et une branche droite (273D), ainsi qu'une barre (274) qui relie fixement l'une à l'autre les branches gauche et droite, et dans lequel les branches gauche (273G) et droite (273D) sont liées en rotation à la partie arrière (112) du châssis (110) de la poussette (100) autour de l'axe de basculement (Y250) lorsque l'accessoire (200) est connecté à la poussette par le mécanisme de connexion (250), en étant conformées de manière à partiellement envelopper des montants respectivement gauche (114G) et droit (114D) de cette partie arrière du châssis de la poussette.

13. Accessoire pour poussette suivant l'une quelconque des revendications 9 à 12, dans lequel le mécanisme de connexion (250) comporte une pièce d'appui (251) :
- qui supporte et guide en déplacement le reste du mécanisme de connexion,
- sur laquelle le support (271) du mécanisme de commande (270) est monté à basculement autour de l'axe de basculement (Y250), et
- qui est intégrée à un repose-pied (260) porté par la partie avant (211) du châssis (210) de l'accessoire (200).

14. Accessoire pour poussette suivant l'une quelconque des revendications précédentes, dans lequel l'accessoire (200) comporte en outre un système de transmission mécanique (290), qui est porté par le châssis (210) de l'accessoire, en s'étendant entre les parties avant (211) et arrière (212) du châssis de l'accessoire, et qui relie mécaniquement l'organe d'actionnement (280) et le mécanisme de commande (270) de manière que l'organe d'actionnement actionne le mécanisme de commande.

15. Accessoire pour poussette suivant la revendication 14 combinée à l'une quelconque des revendications 9 à 13, dans lequel le système de transmission mécanique (290) comporte des câbles (291) qui relient l'organe d'actionnement (280) et l'organe d'accouplement (272) l'un à l'autre de manière que l'organe d'actionnement entraîne en déplacement l'organe d'accouplement.

16. Accessoire pour poussette suivant l'une quelconque des revendications précédentes, dans lequel le châssis (210) de l'accessoire (200) est adapté pour, lorsque l'accessoire est déconnecté de la poussette (100), être plié entre une configuration de service, dans laquelle l'accessoire peut être connecté à la poussette par le mécanisme de connexion (250), et une configuration de stockage, qui est plus compacte que la configuration de service.

17. Ensemble formant poussette double (1), comportant une poussette (100) et un accessoire (200) conforme à l'une quelconque des revendications précédentes, dans lequel la poussette (100) comprend :
- un châssis (110), dont une partie arrière (112) est connectée à la partie avant (211) du châssis (210) de l'accessoire (200) par le mécanisme de connexion (250), et qui, en service, supporte un organe de réception (120) dans lequel peut être installé un autre enfant que celui qui peut être installé dans l'organe de réception (220) de l'accessoire (200),
- au moins une roue avant (130G, 130D) qui, en service, s'appuie et roule sur le sol et qui est reliée à une partie avant (111) du châssis (110) de la poussette (100) de manière pivotante,
- deux roues arrière (140G, 140D) qui, en service, s'appuient et roulent sur le sol et qui sont reliées à la partie arrière (112) du châssis (110) de la poussette (100) de manière fixe,
- un organe de poussée (150) qui est porté par la partie arrière (112) du châssis (110) de la poussette (100), et
- un système de blocage en roulement (160), qui est, au moins en partie, porté par la partie arrière (112) du châssis (110) de la poussette (100) et qui est adapté pour, de manière réversible, interférer avec les roues arrière (140G, 140D) de la poussette de manière à en bloquer le roulement.

18. Ensemble formant poussette double suivant la revendication 17, dans lequel les deux roues (230G, 230D) de l'accessoire (200) sont séparées, perpendiculairement à la direction antéropostérieure, par une voie (V230) qui est plus grande qu'une voie (V140) séparant, perpendiculairement à la direction antéropostérieure, les deux roues arrière (140G, 140D) de la poussette (100).

## Patentansprüche

1. Zubehör (200) für Kinderwagen, das mit einem Kinderwagen (100) verbunden werden kann, um zusammen einen Doppelkinderwagen (1) zu bilden, und das zum Transportieren eines Kinds unbrauchbar ist, wenn das Zubehör von dem Kinderwagen getrennt ist,
wobei das Zubehör (200) Folgendes umfasst:
- einen Rahmen (210), der im Gebrauch ein Aufnahmeglied (220) trägt, in dem ein Kind untergebracht werden kann, das transportiert werden soll,
- einen Verbindungsmechanismus (250) zum reversiblen Verbinden des Zubehörs (200) mit dem Kinderwagen (100), um den Doppelkinderwagen (1) zu bilden, wobei dieser Verbindungsmechanismus von einem vorderen Abschnitt (211) des Rahmens (210) des Zubehörs getragen wird und angepasst ist, um diesen vorderen Abschnitt des Rahmens des Zubehörs abnehmbar an einem hinteren Abschnitt (112) eines Rahmens (110) des Kinderwagens zu befestigen, um sowohl das Zubehör hinter dem Kinderwagen in einer Richtung von vorne nach hinten anzuordnen und eine Schwenkachse (Y250) zu definieren, die sich im Gebrauch im Wesentlichen parallel zu dem Boden und im Wesentlichen senkrecht zu der Richtung von vorne nach hinten erstreckt und um die der vordere Abschnitt des Rahmens des Zubehörs und der hintere Abschnitt des Rahmens des Zubehörs in Bezug aufeinander frei kippen,
- zwei Räder (230G, 230D), die, wenn das Zubehör (200) durch den Verbindungsmechanismus (250) mit dem Kinderwagen (100) verbunden ist, sich auf dem Boden abstützen und rollen und die mit einem hinteren Abschnitt (212) des Rahmens (210) des Zubehörs verbunden sind, sodass sie um jeweilige Schwenkachsen (Z230G, Z230D) schwenkbar sind,
- ein Schiebeglied (240), das von dem hinteren Abschnitt (212) des Rahmens (210) des Zubehörs (200) getragen wird und das manuell von einem Benutzer betätigt werden kann, der hinter dem Doppelkinderwagen (1) steht,
- einen Steuermechanismus (270) zum Steuern einer Rollverriegelung des Doppelkinderwagens (1), wobei der Steuermechanismus von dem vorderen Abschnitt (211) des Rahmens (210) des Zubehörs (200) getragen wird und angepasst ist, um, wenn das Zubehör durch den Verbindungsmechanismus (250) mit dem Kinderwagen (100) verbunden ist, mechanisch mit einem in den Kinderwagen integrierten Rollverriegelungssystem (160) zusammenzuwirken, um das Rollverriegelungssystem zu steuern, und
- ein Betätigungsglied (280), das von dem hinteren Abschnitt (212) des Rahmens (210) des Zubehörs (200) getragen wird, um von einem Benutzer betätigt werden zu können, der hinter dem Doppelkinderwagen (1) steht, und das mit dem Steuermechanismus (270) verbunden ist, um diesen Steuermechanismus zu betätigen.

2. Zubehör für Kinderwagen nach Anspruch 1, wobei das Zubehör (200) ferner einen Verriegelungsmechanismus (300) zum Verriegeln der Räder (230G, 230D) des Zubehörs umfasst, wobei dieser Verriegelungsmechanismus von dem hinteren Abschnitt (212) des Rahmens (210) des Zubehörs getragen wird und dazu angepasst ist, um reversibel mindestens eines oder jedes der zwei Räder des Zubehörs einzugreifen, um deren Rollen unabhängig von der Ausrichtung des Rads des Zubehörs um die Schwenkachse (Z230G, Z230D) dieses Rads des Zubehörs zu verriegeln,
und wobei das Stellglied (280) mit dem Verriegelungsmechanismus (300) verbunden ist, um den Verriegelungsmechanismus in Verbindung mit der Betätigung des Steuermechanismus (270) zu betätigen.

3. Zubehör für Kinderwagen nach Anspruch 2, wobei der Verriegelungsmechanismus (300) für mindestens eines der zwei Räder (230G, 230D) des Zubehörs (200) oder für jedes der zwei Räder des Zubehörs ein Verriegelungselement (301D) umfasst, das im Wesentlichen auf die Schwenkachse (Z230D) des Rads (230D) des Zubehörs zentriert ist und das entlang der Schwenkachse des Rads des Zubehörs in Bezug auf den Rahmen (210) des Zubehörs verstellbar ist zwischen:
- einer ausgerückten Position, in der das Verriegelungselement von dem Befestigungsrad beabstandet ist, sodass das Rad des Zubehörs frei rollen kann, und
- einer eingerückten Position, in der das Verriegelungselement eine Lauffläche (231 D) des Rads des Zubehörs eingreift, um ein Rollen des Rads des Zubehörs zu verriegeln.

4. Zubehör für Kinderwagen nach Anspruch 3, wobei jedes der zwei Räder (230G, 230D) des Zubehörs (200) mit einem Träger (310G, 310D) assoziiert ist:
- der an dem hinteren Abschnitt (212) des Rahmens (210) schwenkbar um die Schwenkachse (Z230G, Z230D) des Rads des Zubehörs montiert ist,
- auf dem das Rad des Zubehörs drehbar um sich selbst zum Rollen montiert ist, und
- das eine Translation des entsprechenden Verriegelungselements (301D) entlang der Schwenkachse des Rads des Zubehörs führt.

5. Zubehör für Kinderwagen nach einem der Ansprüche 3 oder 4, wobei der Verriegelungsmechanismus (300) ferner Folgendes umfasst:
- für das oder jedes Verriegelungselement (301D) eine Feder (305D), die das Verriegelungselement in die ausgerückte Position drückt, und
- einen Aktuator (306), der beim Verstellen mit dem Betätigungsglied (280) verbunden ist und der, wenn der Verriegelungsmechanismus (300) und der Steuermechanismus (270) zusammen durch das Betätigungselement (280) betätigt werden, das das oder die Verriegelungselement(e) von der ausgerückten Position in die eingerückte Position treibt, was der Wirkung der Feder(n) entgegenwirkt.

6. Zubehör für Kinderwagen nach Anspruch 5, wobei das oder jedes Verriegelungselement (301D) ein erstes Ende (302D) und ein zweites Ende (303D) aufweist, die sich entlang der Schwenkachse (Z230D) des entsprechenden Rads (230D) des Zubehörs (200) gegenüberliegen,
wobei das erste Ende (302D) des oder jedes Verriegelungselements (301 D) mit einer ersten Auflagefläche (304D) versehen ist, die, wenn das Verriegelungselement in der eingerückten Position ist, entlang der Schwenkachse (Z230D) des jeweiligen Rads (230D) des Zubehörs (200) gegen die Lauffläche (231D) des entsprechenden Rads des Zubehörs gedrückt wird,
und wobei das zweite Ende (303D) des oder jedes Verriegelungselements (301D) mit einer zweiten Auflagefläche (308D) versehen ist, die unter der Wirkung der entsprechenden Feder (305D) entlang der Schwenkachse (Z230D) des entsprechenden Rads (230D) des Zubehörs (200) gegen eine dafür vorgesehene Fläche (307D) des Aktuators (306) gedrückt wird.

7. Zubehör für Kinderwagen nach einem der Ansprüche 5 oder 6, wobei der Aktuator (306) in Bezug auf den Rahmen (210) des Zubehörs (200) um eine Betätigungsachse (Y306) beweglich ist, die sich im Wesentlichen senkrecht zu den jeweiligen Schwenkachsen (Z230G, Z230D) der Räder (230G, 230D) des Zubehörs (200) erstreckt.

8. Zubehör für Kinderwagen nach Anspruch 7, wobei der hintere Abschnitt (212) des Rahmens (210) des Zubehörs (200) eine Querstrebe (213) umfasst:
- die sich zwischen den zwei Rädern (230G, 230D) des Zubehörs erstreckt,
- in deren Innern der Aktuator (306) montiert und dessen Drehung um die Betätigungsachse (Y306) geführt wird, und
- an dem ein Pedal (281) des Betätigungsglieds (280) schwenkbar um die Betätigungsachse (Y306) montiert und mit dem Aktuator (306) verbunden ist.

9. Zubehör für Kinderwagen nach einem der vorherigen Ansprüche, wobei der Steuermechanismus (270) einen Träger (271) umfasst, der:
- mit dem vorderen Abschnitt (211) des Rahmens (210) des Zubehörs (200) frei schwenkend um die Schwenkachse (Y250) verbunden ist, und
- geformt ist, um, wenn das Zubehör (200) durch den Verbindungsmechanismus (250) mit dem Kinderwagen (100) verbunden ist, den hinteren Abschnitt (112) des Kinderwagenrahmens (110) teilweise zu umhüllen, um mit diesem hinteren Abschnitt des Rahmens des Kinderwagens um die Schwenkachse drehbar verbunden zu sein,
und wobei der Steuermechanismus (270) auch ein Kupplungsglied (272) umfasst, das:
- von der Halterung (271) des Steuermechanismus beweglich getragen wird,
- mit dem Betätigungsglied (280) verbunden ist, damit das Betätigungsglied eine Verstellung des Kupplungsglieds antreibt, und
- angepasst ist, um, wenn das Zubehör (200) durch den Verbindungsmechanismus (250) mit dem Kinderwagen (100) verbunden ist, um das Verriegelungssystem (160) des Kinderwagens in Eingriff zu bringen.

10. Zubehör für Kinderwagen nach Anspruch 9, wobei das Kupplungsglied (272) angepasst ist, um, wenn das Zubehör (200) durch den Verbindungsmechanismus (250) mit dem Kinderwagen (100) verbunden ist, bei Verstellung mit einem Betätigungsteil (161) verbunden zu werden, insbesondere durch Formschluss, wobei das Betätigungsteil zu dem Rollverriegelungssystem (160) des Kinderwagens gehört und bereitgestellt ist, um, bei Trennen des Zubehörs von dem Kinderwagen direkt von einem Benutzer aktiviert zu werden, der hinter dem Kinderwagen steht.

11. Zubehör für Kinderwagen nach Anspruch 10, wobei das Kupplungsglied (272) einen Gabelkopf (275) umfasst, der angepasst ist, um bei Verstellung mit einem Pedal (162) des Betätigungsteils (161) verbunden zu werden und dieses Pedal abdeckt.

12. Zubehör für Kinderwagen nach einem der Ansprüche 9 bis 11, wobei die Halterung (271) des Steuermechanismus (270) einen linken Zweig (273G) und einen rechten Zweig (273D) sowie eine Stange (274) umfasst, die den linken und den rechten Zweig fest miteinander verbindet, und wobei der linke (273G) und der rechte (273D) Zweig drehbar mit dem hinteren Abschnitt (112) des Rahmens (110) des Kinderwagens (100) um die Schwenkachse (Y250) verbunden sind, wenn das Zubehör (200) durch den Verbindungsmechanismus (250) mit dem Kinderwagen verbunden ist, wobei sie auf eine Weise geformt sind, dass sie die linke (114G) bzw. die rechte (114D) Stützen dieses hinteren Abschnitts des Rahmens des Kinderwagens teilweise umschließen.

13. Zubehör für Kinderwagen nach einem der Ansprüche 9 bis 12, wobei der Verbindungsmechanismus (250) ein Auflageteil (251) umfasst:
- das den Rest des Verbindungsmechanismus bei Verstellung trägt und führt,
- an dem die Halterung (271) des Steuermechanismus (270) schwenkend um die Schwenkachse (Y250) montiert ist, und
- das in eine Fußstütze (260) integriert ist, die von dem vorderen Abschnitt (211) des Rahmens (210) des Zubehörs (200) getragen wird.

14. Zubehör für Kinderwagen nach einem der vorherigen Ansprüche, wobei das Zubehör (200) ferner ein mechanisches Übertragungssystem (290) umfasst, das von dem Rahmen (210) des Zubehörs getragen wird, sich zwischen dem vorderen (211) und dem hinteren (212) Abschnitt des Rahmens des Zubehörs erstreckt und das das Betätigungsglied (280) und den Steuermechanismus (270) mechanisch verbindet, sodass das Betätigungsglied den Steuermechanismus betätigt.

15. Zubehör für Kinderwagen nach Anspruch 14 in Kombination mit einem der Ansprüche 9 bis 13, wobei das mechanische Übertragungssystem (290) Kabel (291) umfasst, die das Betätigungsglied (280) und das Kupplungsglied (272) miteinander verbinden, sodass das Betätigungselement das Kupplungsglied in Bewegung versetzt.

16. Zubehör für Kinderwagen nach einem der vorherigen Ansprüche, wobei der Rahmen (210) des Zubehörs (200) angepasst ist, um, wenn das Zubehör von dem Kinderwagen (100) getrennt ist, zwischen einer Gebrauchskonfiguration, in der das Zubehör durch den Verbindungsmechanismus (250) mit dem Kinderwagen verbunden werden kann, und einer Aufbewahrungskonfiguration, die kompakter ist als die Gebrauchskonfiguration, geklappt werden kann.

17. Doppelkinderwagenanordnung (1), umfassend einen Kinderwagen (100) und ein Zubehör (200) nach einem der vorherigen Ansprüche, wobei der Kinderwagen (100) Folgendes umfasst:
- einen Rahmen (110), von dem ein hinterer Abschnitt (112) mit dem vorderen Abschnitt (211) des Rahmens (210) des Zubehörs (200) durch den Verbindungsmechanismus (250) verbunden ist, und der im Gebrauch ein Aufnahmeglied (120) trägt, in dem ein anderes Kind als das, das in dem Aufnahmeglied (220) des Zubehörs (200) aufgenommen werden kann,
- mindestens ein Vorderrad (130G, 130D), das sich im Gebrauch auf dem Boden abstützt und rollt und das schwenkbar mit einem vorderen Abschnitt (111) des Rahmens (110) des Kinderwagens (100) verbunden ist,
- zwei Hinterräder (140G, 140D), die sich im Gebrauch auf dem Boden abstützen und rollen und die fest mit dem hinteren Abschnitt (112) des Rahmens (110) des Kinderwagens (100) verbunden sind,
- ein Schiebeglied (150), das von dem hinteren Abschnitt (112) des Rahmens (110) des Kinderwagens (100) getragen wird, und
- ein Rollverriegelungssystem (160), das zumindest teilweise von dem hinteren Abschnitt (112) des Rahmens (110) des Kinderwagens (100) getragen wird und das geeignet ist, reversibel die Hinterräder (140G, 140D) des Kinderwagens einzugreifen, um deren Rollen zu verriegeln.

18. Doppelkinderwagenanordnung nach Anspruch 17, wobei die zwei Räder (230G, 230D) des Zubehörs (200) senkrecht zu der Richtung vorwärts-rückwärts durch eine Spur (V230) getrennt sind, die größer ist als eine Spur (V140), die senkrecht zu der Richtung vorwärts-rückwärts die zwei Hinterräder (140G, 140D) des Kinderwagens (100) trennt.

## Claims

1. A stroller accessory (200), which is connectable to a stroller (100) so as together to form a double stroller (1) and that is unusable to transport a child when the accessory is disconnected from the stroller,
wherein the accessory (200) includes:
- a frame (210) that, during use, bears a receiving member (220) in which a child to be transported can be installed,
- a connection mechanism (250) for reversibly connecting the accessory (200) to the stroller (100) in order to form the double stroller (1), this connection mechanism being borne by a front part (211) of the frame (210) of the accessory and being suitable for securing this front part of the frame of the accessory removably to a rear part (112) of a frame (110) of the stroller so as both to arrange the accessory behind the stroller in a front-back direction and to define a tilting axis (Y250), which extends during use substantially parallel to the ground and substantially perpendicular to the front-back direction and around which the front part of the frame of the accessory and the rear part of the frame of the stroller tilt freely relative to one another,
- two wheels (230G, 230D), which, when the accessory (200) is connected to the stroller (100) by the connection mechanism (250), bear and roll on the ground and which are coupled to a rear part (212) of the frame (210) of the accessory so as to pivot around respective pivot axes (Z230G, Z230D),
- a pushing member (240), which is borne by the rear part (212) of the frame (210) of the accessory (200) and which is suitable for being urged manually by a user standing behind the double stroller (1),
- a control mechanism (270) for controlling a rolling blocking of the double stroller (1), this control mechanism being borne by the front part (211) of the frame (210) of the accessory (200) and being suitable, when the accessory is connected to the stroller (100) by the connection mechanism (250), for cooperating mechanically with a rolling blocking system (160), integrated into the stroller, so as to control this rolling blocking system, and
- an actuating member (280) that is borne by the rear part (212) of the frame (210) of the accessory (200) so as to be able to be activated by a user standing behind the double stroller (1), and that is coupled to the control mechanism (270) so as to actuate this control mechanism.

2. The stroller accessory according to claim 1, wherein the accessory (200) further includes a blocking mechanism (300) for blocking the wheels (230G, 230D) of the accessory, this blocking mechanism being borne by the rear part (212) of the frame (210) of the accessory and being suitable for interfering reversibly with at least one or with each of the two wheels of the accessory so as to block the rolling thereof irrespective of the orientation of the wheel of the accessory around the pivot axis (Z230G, Z230D) of this wheel of the accessory,
and wherein the actuating member (280) is coupled to the blocking mechanism (300) so as to actuate the blocking mechanism jointly with the actuation of the control mechanism (270).

3. The stroller accessory according to claim 2, wherein the blocking mechanism (300) includes, for at least one of the two wheels (230G, 230D) of the accessory (200) or for each of the two wheels of the accessory, a blocking element (301D), which is substantially centered on the pivot axis (Z230D) of the wheel (230D) of the accessory and which is movable along the pivot axis of the wheel of the accessory relative to the frame (210) of the accessory between:
- a disengaged position, in which the blocking element is separated from the wheel of the accessory so as to leave the wheel of the accessory free to roll, and
- an engaged position, in which the blocking element interferes with a tread (231D) of the wheel of the accessory so as to block the rolling of this wheel of the accessory.

4. The stroller accessory according to claim 3, wherein each of the two wheels (230G, 230D) of the accessory (200) is associated with a holder (310G, 310D):
- that is mounted on the rear part (212) of the frame (210) pivoting around the pivot axis (Z230G, Z230D) of the wheel of the accessory,
- on which the wheel of the accessory is mounted rotating around itself to roll, and
- which guides the corresponding blocking element (301D) in translation along the pivot axis of the wheel of the accessory.

5. The stroller accessory according to one of claims 3 or 4, wherein the blocking mechanism (300) further includes:
- for the or each blocking element (301D), a spring (305D) that pushes the blocking element back toward the disengaged position, and
- an actuator (306), which is connected in movement to the actuating member (280) and which, during the joint actuation of the blocking mechanism (300) and the control mechanism (270) by the actuating member (280), drives the blocking element(s) from the disengaged position to the engaged position, while thwarting the action of the spring(s).

6. The stroller accessory according to claim 5, wherein the or each blocking element (301D) includes a first end (302D) and a second end (303D), which are opposite one another along the pivot axis (Z230D) of the corresponding wheel (230D) of the accessory (200),
wherein the first end (302D) of the or each blocking element (301D) is provided with a first bearing surface (304D) that, when the blocking element is in the engaged position, is pressed along the pivot axis (Z230D) of the corresponding wheel (230D) of the accessory (200) against the tread (231D) of the corresponding wheel of the accessory,
and wherein the second end (303D) of the or each blocking element (301D) is provided with a second bearing surface (308D) that, under the action of the corresponding spring (305D), is pressed along the pivot axis (Z230D) of the corresponding wheel (230D) of the accessory (200) against a dedicated surface (307D) of the actuator (306).

7. The stroller accessory according to one of claims 5 or 6, wherein the actuator 306 is rotatable, relative to the frame (210) of the accessory (200), around an actuating axis (Y306) that extends substantially perpendicular to the respective pivot axes (Z230G, Z230D) of the wheels (230G, 230D) of the accessory (200).

8. The stroller accessory according to claim 7, wherein the rear part (212) of the frame (210) of the accessory (200) comprises a crosspiece (213):
- that extends between the two wheels (230G, 230D) of the accessory,
- inside which the actuator (306) is mounted and guided in rotation around the actuating axis (Y306), and
- on which a pedal (281) of the actuating member (280) is mounted tilting around the actuating axis (Y306), while being secured to the actuator (306).

9. The stroller accessory according to any one of the preceding claims, wherein the control mechanism (270) includes a holder (271) that is:
- coupled to the front part (211) of the frame (210) of the accessory (200) freely tilting around the tilting axis (Y250), and
- configured so as, when the accessory (200) is connected to the stroller (100) by the connection mechanism (250), to partially surround the rear part (112) of the frame (110) of the stroller so as to be connected in rotation to this rear part of the frame of the stroller around the tilting axis,
and wherein the control mechanism (270) also includes a coupling member (272) that is:
- borne movably by the holder (271) of the control mechanism,
- coupled to the actuating mechanism (280) such that the actuating mechanism drives the movement of the coupling member, and
- suitable, when the accessory (200) is connected to the stroller (100) by the connection mechanism (250), for engaging the rolling blocking system (160) of the stroller.

10. The stroller accessory according to claim 9, wherein the coupling member (272) is suitable, when the accessory (200) is connected to the stroller (100) by the connection mechanism (250), for connecting itself in movement to an actuating part (161), in particular by shape matching, said actuating part belonging to the rolling blocking system (160) of the stroller and being provided, when the accessory is disconnected from the stroller, for being activated directly by a user standing behind the stroller.

11. The stroller accessory according to claim 10, wherein the coupling member (272) includes a yoke (275) that is suitable for connecting itself in movement to a pedal (162) of the actuating part (161), while capping this pedal.

12. The stroller accessory according to any one of claims 9 to 11, wherein the holder (271) of the control mechanism (270) includes a left branch (273G) and a right branch (273D), as well as a bar (274) that fixedly couples the left and right branches to one another, and wherein the left (273G) and right (273D) branches are coupled in rotation to the rear part (112) of the frame (110) of the stroller (100) around the tilting axis (Y250) when the accessory (200) is connected to the stroller by the connection mechanism (250), while being configured so as to partially surround left (114G) and right (114D) uprights, respectively, of this rear part of the frame of the stroller.

13. The stroller accessory according to any one of claims 9 to 12, wherein the connection mechanism (250) includes a bearing part (251):
- that supports and guides the movement of the rest of the connection mechanism,
- on which the holder (271) of the control mechanism (270) is mounted with tilting around the tilting axis (Y250), and
- that is integrated into a footrest (260) borne by the front part (211) of the frame (210) of the accessory (200).

14. The stroller accessory according to any one of the preceding claims, wherein the accessory (200) further includes a mechanical transmission system (290), which is borne by the frame (210) of the accessory, while extending between the front (211) and rear (212) parts of the frame of the accessory, and which mechanically couples the actuating member (280) and the control mechanism (270) such that the actuating member actuates the control mechanism.

15. The stroller accessory according to claim 14 combined with any one of claims 9 to 13, wherein the mechanical transmission system (290) includes cables (291) that couple the actuating member (280) and the coupling member (272) to one another such that the actuating member drives the movement of the coupling member.

16. The stroller accessory according to any one of the preceding claims, wherein the frame (210) of the accessory (200) is suitable, when the accessory is disconnected from the stroller (100), for being folded between a usage configuration, in which the accessory can be connected to the stroller by the connection mechanism (250), and a storage configuration, which is more compact than the usage configuration.

17. An assembly forming a double stroller (1), including a stroller (100) and an accessory (200) according to any one of the preceding claims, wherein the stroller (100) comprises:
- a frame (110), a rear part (112) of which is connected to the front part (211) of the frame (210) of the accessory (200) by the connection mechanism (250) and which, during use, supports a receiving member (120) in which a child can be installed other than the child who can be installed in the receiving member (220) of the accessory (200),
- at least one front wheel (130G, 130D) that, during use, bears and rolls on the ground and that is coupled to a front part (111) of the frame (110) of the stroller (100) in a pivoting manner,
- two rear wheels (140G, 140D) that, during use, bear and roll on the ground and that are coupled to the rear part (112) of the frame (110) of the stroller (100) fixedly,
- a pushing member (150) that is borne by the rear part (112) of the frame (110) of the stroller (100), and
- a rolling blocking system (160) that is at least partly borne by the rear part (112) of the frame (110) of the stroller (100) and that is suitable for interfering reversibly with the rear wheels (140G, 140D) of the stroller so as to block the rolling thereof.

18. The assembly forming a double stroller according to claim 17, wherein the two wheels (230G, 230D) of the accessory (200) are separated, perpendicular to the front-back direction, by a path (V230) that is larger than a path (V140) separating, perpendicular to the front-back direction, the two rear wheels (140G, 140D) of the stroller (100).
